(19) Europäisches Patentamt / European Patent Office / Office européen des brevets

(11) **EP 3 604 254 B1**

(12) **EUROPEAN PATENT SPECIFICATION**

(45) Date of publication and mention
of the grant of the patent:
**12.07.2023 Bulletin 2023/28**

(21) Application number: **18778264.4**

(22) Date of filing: **27.03.2018**

(51) International Patent Classification (IPC):
**B32B 17/10** (2006.01)   **C03C 27/12** (2006.01)
**C08L 29/14** (2006.01)   **C08J 5/18** (2006.01)

(52) Cooperative Patent Classification (CPC):
(C-Sets available)
**B32B 17/1022; B32B 17/10036; B32B 17/10568;**
**B32B 17/10587; B32B 17/10761; C08K 5/0016;**
**C08L 29/14; C08L 59/00;** B32B 2250/02;
B32B 2307/202; B32B 2307/412; B32B 2311/08;
B32B 2311/12; C08L 2205/025          (Cont.)

(86) International application number:
**PCT/JP2018/012560**

(87) International publication number:
**WO 2018/181389 (04.10.2018 Gazette 2018/40)**

(54) **POLYVINYL ACETAL RESIN FILM FOR LAMINATED GLASS**

POLYVINYLACETALHARZFOLIE FÜR VERBUNDGLAS

FILM DE RÉSINE DE POLYACÉTAL DE VINYLE POUR VERRE FEUILLETÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **27.03.2017 JP 2017061694**

(43) Date of publication of application:
**05.02.2020 Bulletin 2020/06**

(73) Proprietor: **Kuraray Europe GmbH**
**65795 Hattersheim am Main (DE)**

(72) Inventors:
• **ISOUE, Koichiro**
 **Kurashiki-shi**
 **Okayama 713-8550 (JP)**
• **KOISHIKAWA, Jun**
 **Tokyo 100-8115 (JP)**
• **YASUDA, Hirotaka**
 **Kurashiki-shi**
 **Okayama 713-8550 (JP)**

• **KELLER, Uwe**
 **53177 Bonn (DE)**

(74) Representative: **Müller-Boré & Partner**
**Patentanwälte PartG mbB**
**Friedenheimer Brücke 21**
**80639 München (DE)**

(56) References cited:
**EP-A1- 3 076 751      WO-A1-2011/102197**
**WO-A1-2015/019438    WO-A1-2015/019445**
**WO-A1-2015/059828    WO-A1-2016/052603**
**JP-A- H 051 108      JP-A- 2000 203 901**
**JP-A- 2003 503 236   US-A1- 2015 217 547**
**US-A1- 2016 288 459**

(52) Cooperative Patent Classification (CPC): (Cont.)

C-Sets
**C08K 5/0016, C08L 29/14;**
**C08L 29/14, C08K 5/0016, C08L 29/14**

**Description**

TECHNICAL FIELD

The present invention relates to a polyvinyl acetal resin film for laminated glass. Moreover, the present invention relates to a laminated glass which has the polyvinyl acetal resin film between a plurality of transparent substrates.

BACKGROUND ART

As a method of removing icing and cloudiness of a glass in a building or a vehicle, a method of applying hot air to the glass is known. However, this method has a problem that it takes time to obtain sufficient forward visibility. In addition, in order to prevent malfunction of a camera or a sensor attached to a glass such as a windshield, it is necessary to heat around the camera or the sensor to remove icing and cloudiness. However, in an electric vehicle in which combustion heat of fuel cannot be used for this removal, there is a problem that the method of heating air by electricity and applying hot air to a glass is inefficient, which directly leads to a decrease in cruising distance.

Thus, a method of removing icing and cloudiness by installing a heating wire on a glass to be distributed with power is proposed.

For example, Patent Document 1 describes a laminated glass containing electric wires. The laminated glass is formed by covering upper and lower sides of a functional layer with an upper adhesive layer and a lower adhesive layer, and covering upper and lower sides of the upper and lower adhesive layers with an upper glass plate and a lower glass plate, with an electric wire interposed between the lower adhesive layer and the lower glass plate. Patent Document 1 specifically describes an example using a tungsten wire as the electric wire.

Further, for example, Patent Document 2 describes a heating element. The heating element comprises a transparent substrate, an adhesive layer provided on at least one side of the transparent substrate, a conductive heat emitting line provided on the adhesive layer, a coating film capsulating the conductive heat emitting line and an upper side of the adhesive layer not covered by the heat emitting line, a bus bar electrically connected to the conductive heat emitting line, and a power part connected to the bus bar. Patent Document 2 specifically describes an example using a PET (polyethylene terephthalate) film as the transparent substrate.

Furthermore, for example, Patent Document 3 describes a method of producing a laminated glass composite with an electrically conductive structure, comprising bonding two transparent plates with at least one sheet A and at least one sheet B, in which the sheet A contains a polyvinylacetal PA and a plasticizer WA, and the sheet B contains a polyvinylacetal PB and a plasticizer WB.

PRIOR ART DOCUMENTS

PATENT DOCUMENTS

Patent Document 1: JP 2013-056811 A
Patent Document 2: JP 2013-516043 A
Patent Document 3: US 2016/288459 A1

SUMMARY OF THE INVENTION

PROBLEMS TO BE SOLVED BY THE INVENTION

However, the process of arranging a large number of tungsten wires between the glass plates and integrating the tungsten wires with the functional layer as described in Patent Document 1 is complicated and inferior in productivity. In addition, since a thick tungsten wire is used, a problem with forward visibility occurs.

In a laminated glass using a PET film as described in Patent Document 2, there are problems that two interlayer films are required and thus a heating element is located near the center of the laminated glass, which lowers glass heating efficiency, that the PET film is inferior in curved surface followability and thus cannot be applied to a windshield having high curvature, that the PET film is inferior in stretchability and thus a head impact index at the time of collision increases, and that high haze derived from an adhesive for bonding a copper foil to the PET film arises.

In a polyvinyl acetal sheet as described in Patent Document 3, since a polyvinyl acetal sheet containing no or a small amount of plasticizer is inferior in film forming properties, only the sheet using polyvinyl acetal resin of low polymerization degree is used. When such a sheet and an interlayer film containing a plasticizer are laminated to produce

3

a laminated glass, the plasticizer in the interlayer film is transferred to the polyvinyl acetal sheet, whereby there is a risk that heat resistance may be lowered and two glasses of a laminated glass may be misaligned when exposed to high temperature. In addition, there is a risk that a functional layer or a structure (an electrically conductive structure) provided when the laminated glass is produced may be deformed or destroyed by melting of the polyvinyl acetal sheet.

In the polyvinyl acetal sheet as described in Patent Document 3, a linear conductive material (a wiring) of a conductive layer may be broken when a laminated glass is produced, or a resistance value may be varied and uniform heat generation cannot be obtained. It has been found by the present inventors that the peeling or partial thinning of the linear conductive material during the formation of the linear conductive material on the surface of the polyvinyl acetal sheet may be considered as the cause.

Accordingly, the problem to be solved by the present invention is to provide a polyvinyl acetal resin film in which, when a linear conductive material of a conductive layer is formed on a surface of the polyvinyl acetal resin film, peeling or partial thinning of the linear conductive material is less likely to occur, and defects such as disconnection or formation of a high resistance portion during lamination are less likely to occur. Another problem to be solved by the present invention is to provide a polyvinyl acetal resin film capable of suppressing deformation and destruction of a functional layer or an electrically conductive structure (a conductive layer) when a laminated glass is produced and capable of suppressing misalignment of a glass of the obtained laminated glass under high temperature conditions, and a laminated glass using the polyvinyl acetal resin film.

SOLUTIONS TO THE PROBLEMS

The present inventors intensively studied in detail about a polyvinyl acetal resin film for laminated glass in order to solve the above problem, thereby completing the present invention.

That is, the present invention is represented by the following embodiment:

A polyvinyl acetal resin film for laminated glass,
a viscosity of toluene/ethanol=1/1 (by mass ratio) solution of a polyvinyl acetal resin in a resin composition constituting the polyvinyl acetal resin film with a concentration of 10% by mass, measured at 30 rpm and 20°C by using a Brookfield-type (B-type) viscometer, being 100 to 1000 mPa·s,
the polyvinyl acetal resin film comprising a plasticizer in an amount of 0 to 20% by mass based on a total mass of the resin composition constituting the polyvinyl acetal resin film,
the polyvinyl acetal resin film having a thickness of 10 to 350 $\mu$m,
the polyvinyl acetal resin film exhibiting a mean spacing Sm value of unevenness of at least one side of 500 $\mu$m or more, and a ratio Sm/Rz of the mean spacing Sm value of unevenness to a value of ten-point average roughness Rz of at least one side of 200 or more, and wherein molecular weight distribution of the polyvinyl acetal resin in the resin composition constituting the polyvinyl acetal resin film is 2.7 or more.

EFFECTS OF THE INVENTION

By using the polyvinyl acetal resin film of the present invention, it is possible to provide a polyvinyl acetal resin film in which, when a linear conductive material of a conductive layer is formed on a surface of the polyvinyl acetal resin film, peeling or partial thinning of the linear conductive material is less likely to occur, and defects such as disconnection or formation of a high resistance portion during lamination are less likely to occur. Furthermore, by using the polyvinyl acetal resin film of the present invention, it is possible to provide a polyvinyl acetal resin film capable of suppressing deformation and destruction of a functional layer or a conductive layer when a laminated glass is produced and capable of suppressing misalignment of a glass of the obtained laminated glass under high temperature conditions, and a laminated glass using the polyvinyl acetal resin film.

BRIEF DESCRIPTION OF THE DRAWINGS

Fig. 1 illustrates a schematic view of a laminated glass used for measurement of a heat creep resistance value (1).
Fig. 2 illustrates a schematic view of a laminated glass used for measurement of a heat creep resistance value (2).
Fig. 3 illustrates a schematic view of the laminated glass used for measurement of the heat creep resistance value (1) or the heat creep resistance value (2) to which an iron plate is adhered.
Fig. 4 illustrates a schematic view of a state in which the laminated glass to which the iron plate is bonded is fixed at a predetermined angle in order to measure the heat creep resistance value (1) or the heat creep resistance value (2).

EMBODIMENTS OF THE INVENTION

The polyvinyl acetal resin film of the present invention is a polyvinyl acetal resin film for laminated glass. A viscosity of toluene/ethanol=1/1 (by mass ratio) solution of a polyvinyl acetal resin in a resin composition constituting the polyvinyl acetal resin film with a concentration of 10% by mass, measured at 30 rpm and 20°C by using a Brookfield-type (B-type) viscometer, is 100 to 1000 mPa·s, the polyvinyl acetal resin film comprises a plasticizer in an amount of 0 to 20% by mass based on a total mass of the resin composition constituting the polyvinyl acetal resin film, the polyvinyl acetal resin film has a thickness of 10 to 350 µm, the polyvinyl acetal resin film exhibits a mean spacing Sm value of unevenness of at least one side of 500 µm or more, and a ratio Sm/Rz of the mean spacing Sm value of unevenness to a value of ten-point average roughness Rz of at least one side of 200 or more. The molecular weight distribution of the polyvinyl acetal resin in the resin composition constituting the polyvinyl acetal resin film is 2.7 or more.

The thickness of the polyvinyl acetal resin film of the present invention is 10 to 350 µm. When the thickness of the polyvinyl acetal resin film is less than 10 µm, there arises a problem that distortion or the like occurs in a functional layer due to shrinkage or deformation of the polyvinyl acetal resin film. On the other hand, when the thickness of the polyvinyl acetal resin film is more than 350 µm, there arises a problem that due to the fact that an amount of the plasticizer to be transferred from a plasticized polyvinyl acetal resin layer optionally laminated on the polyvinyl acetal resin film increases and the amount of the plasticizer in the plasticized polyvinyl acetal resin layer decreases, head impact increases when a vehicle mounted with a vehicle glass using the polyvinyl acetal resin film has collided. The thickness of the polyvinyl acetal resin film is preferably 20 µm or more and more preferably 30 µm or more. The thickness of the polyvinyl acetal resin film is preferably 330 µm or less, more preferably 295 µm or less, more preferably 270 µm or less, more preferably 250 µm or less, more preferably 150 µm or less, more preferably 120 µm or less, and most preferably less than 100 µm. When the thickness of the polyvinyl acetal resin film is in the range from the above lower limit value to the above upper limit value, the above problem is hard to occur, and good film forming properties are more easily obtained. The thickness of the polyvinyl acetal resin film can be measured using a thickness gauge, a laser microscope, or the like.

<Resin used to constitute polyvinyl acetal resin film>

The polyvinyl acetal resin film of the present invention contains a polyvinyl acetal resin produced by acetalization of a polyvinyl alcohol-based resin, such as polyvinyl alcohol or ethylene vinyl alcohol copolymer.

The polyvinyl acetal resin film may contain one polyvinyl acetal resin or two or more polyvinyl acetal resins which differ from each other in any one or more of a viscosity average polymerization degree, an acetalization degree, an acetyl group amount, a hydroxyl group amount, an ethylene content, a molecular weight of aldehyde used for acetalization, and a chain length. When the polyvinyl acetal resin film contains two or more different polyvinyl acetal resins, from the viewpoint of ease of melt molding and from the viewpoint of preventing deformation of the functional layer at the time of producing a laminated glass and misalignment of a glass at the time of using the laminated glass, the polyvinyl acetal resin is preferably a mixture of at least two polyvinyl acetal resins having different viscosity average polymerization degrees, or an acetalized product of a mixture of at least two polyvinyl alcohol-based resins having different viscosity average polymerization degrees.

The polyvinyl acetal resin used in the present invention can be produced, for example, by the following method, but is not limited thereto. First, an aqueous solution of polyvinyl alcohol or ethylene vinyl alcohol copolymer having a concentration of 3 to 30% by mass is maintained in a temperature range of 80 to 100°C, and then gradually cooled over 10 to 60 minutes. When the temperature drops to -10 to 30°C, an aldehyde and an acid catalyst are added, and the acetalization reaction is carried out for 30 to 300 minutes while keeping the temperature constant. Next, the temperature of the reaction solution is raised to a temperature of 20 to 80°C over 30 to 200 minutes, and held for 30 to 300 minutes. Thereafter, the reaction solution is filtered if necessary, and then neutralized by adding a neutralizing agent such as alkali, and the resin is filtered, washed with water and dried to produce a polyvinyl acetal resin.

The acid catalyst used for the acetalization reaction is not particularly limited. Both organic and inorganic acids can be used. Examples of such acid catalysts include acetic acid, p-toluenesulfonic acid, nitric acid, sulfuric acid, and hydrochloric acid. Among these acid catalysts, hydrochloric acid, sulfuric acid and nitric acid are preferably used from the viewpoint of acid strength and ease of removal by washing.

From the viewpoint of more easily obtaining a polyvinyl acetal resin having a suitable breaking energy, an aldehyde or a keto compound used for producing the polyvinyl acetal resin is preferably a linear, branched or cyclic compound having 2 to 10 carbon atoms and more preferably a linear or branched compound. This gives a proper linear or branched acetal group. The polyvinyl acetal resin used in the present invention may be an acetalized product obtained by acetalizing polyvinyl alcohol or ethylene vinyl alcohol copolymer with a mixture of a plurality of aldehydes or keto compounds.

The polyvinyl acetal resin used in the present invention is preferably a polyvinyl acetal resin produced by the reaction of at least one polyvinyl alcohol and one or more aliphatic unbranched aldehydes having 2 to 10 carbon atoms.

As such an aldehyde, n-butyraldehyde is preferable from the viewpoint of more easily obtaining a polyvinyl acetal resin having a suitable breaking energy. The content of n-butyraldehyde in aldehyde used for acetalization is preferably 50% by mass or more, more preferably 80% by mass or more, still more preferably 95% by mass or more, and particularly preferably 99% by mass or more and may be 100% by mass.

The polyvinyl alcohol-based resin used to produce the polyvinyl acetal resin may be a single substance or a mixture of polyvinyl alcohol-based resins having different viscosity average polymerization degrees, degrees of hydrolysis, or the like.

The viscosity average polymerization degree of the polyvinyl alcohol-based resin which is a raw material of the polyvinyl acetal resin is preferably 100 or more, more preferably 300 or more, more preferably 400 or more, still more preferably 600 or more, particularly preferably 700 or more, and most preferably 750 or more. When the viscosity average polymerization degree of the polyvinyl alcohol-based resin is equal to or more than the above lower limit value, deformation and disconnection of a conductive layer are more easily suppressed when a laminated glass is produced, and in the obtained laminated glass, a phenomenon in which the glass is misaligned by heat is more easily prevented. The viscosity average polymerization degree of the polyvinyl alcohol-based resin is preferably 5000 or less, more preferably 3000 or less, still more preferably 2500 or less, particularly preferably 2300 or less, and most preferably 2000 or less. When the viscosity average polymerization degree of the polyvinyl alcohol-based resin is equal to or less than the above upper limit value, good film forming properties are more easily obtained. The viscosity average polymerization degree of the polyvinyl alcohol-based resin can be measured based on JIS K 6726 "Polyvinyl alcohol test method".

A preferable numerical value of the viscosity average polymerization degree of the polyvinyl acetal resin is the same as the numerical value of the viscosity average polymerization degree of the polyvinyl alcohol-based resin described above. When the polyvinyl acetal resin film contains two or more different polyvinyl acetal resins, it is preferable that the viscosity average polymerization degree of at least one polyvinyl acetal resin is in the range from the above lower limit value to the above upper limit value.

A preferable acetyl group amount in the polyvinyl acetal resin used to constitute the polyvinyl acetal resin film is as follows. That is, when a repeat unit is assumed to be a unit comprising two carbon atoms of the main chain in the polyvinyl alcohol resin which is a raw material for producing the polyvinyl acetal resin (for example, a vinyl alcohol unit, a vinyl acetate unit, and an ethylene unit), the vinyl acetate unit is in an amount of preferably 0.1 to 20 mol% and more preferably 0.5 to 3 mol% or 5 to 8 mol% based on the repeat units. The acetyl group amount (hereinafter means an amount of vinyl acetate units) can be adjusted within the above range by appropriately adjusting a saponification degree of the polyvinyl alcohol-based resin of the raw material. The acetyl group amount affects the polarity of the polyvinyl acetal resin, which may change the plasticizer compatibility and mechanical strength of the polyvinyl acetal resin film. When the polyvinyl acetal resin film contains the polyvinyl acetal resin in which the acetyl group amount is within the above range, good bonding with the optionally laminated plasticized polyvinyl acetal resin layer, reduction of optical distortion and the like are more easily achieved. When the polyvinyl acetal resin film contains two or more different polyvinyl acetal resins, the acetyl group amount of at least one polyvinyl acetal resin is preferably within the above range.

The acetalization degree of the polyvinyl acetal resin used in the present invention is not particularly limited. Assuming that a repeat unit is the unit comprising two carbon atoms of the main chain in the polyvinyl alcohol resin which is a raw material for producing the polyvinyl acetal resin (for example, a vinyl alcohol unit, a vinyl acetate unit, and an ethylene unit), the acetalization degree is the amount of the above repeat units forming acetal based on the repeat units. The acetalization degree is preferably 40 to 86 mol%, more preferably 45 to 84 mol%, more preferably 50 to 82 mol%, still more preferably 60 to 82 mol%, and particularly preferably 68 to 82 mol%. The acetalization degree of the polyvinyl acetal resin can be adjusted within the above range by appropriately adjusting the amount of aldehyde used in acetalizing the polyvinyl alcohol-based resin. When the acetalization degree is within the above range, the mechanical strength of the polyvinyl acetal resin film of the present invention tends to be sufficient, and the compatibility between the polyvinyl acetal resin and the plasticizer is unlikely to be reduced. When the polyvinyl acetal resin film contains two or more different polyvinyl acetal resins, the acetalization degree of at least one polyvinyl acetal resin is preferably within the above range.

The hydroxyl group amount of the polyvinyl acetal resin is preferably 6 to 26% by mass, more preferably 12 to 24% by mass, more preferably 15 to 22% by mass, and more preferably 18 to 21% by mass as the mass of the vinyl alcohol units of the polyvinyl acetal resin. When the hydroxyl group amount (hereinafter means an amount of vinyl alcohol units) is within the above range, a difference in refractive index with the optionally laminated plasticized polyvinyl acetal resin layer is more easily reduced, and a laminated glass with little optical unevenness is more easily obtained. On the other hand, in order to additionally impart sound insulation performance, the preferable range is 6 to 20% by mass, more preferably 8 to 18% by mass, still more preferably 10 to 15% by mass, and particularly preferably 11 to 13% by mass. The hydroxyl group amount can be adjusted within the above range by adjusting the amount of aldehyde used in acetalizing the polyvinyl alcohol-based resin. When the polyvinyl acetal resin film contains two or more different polyvinyl acetal resins, the hydroxyl group amount of at least one polyvinyl acetal resin is preferably within the above range.

The polyvinyl acetal resin is generally constituted of an acetal group unit, a hydroxyl group unit, and an acetyl group unit, and these respective units can be measured by the "Testing Methods for Polyvinyl Butyral" of JIS K 6728 or a nuclear magnetic resonance method (NMR).

When the polyvinyl acetal resin contains a unit other than the acetal group unit, by measuring a unit quantity of a hydroxyl group and a unit quantity of an acetyl group and subtracting these both unit quantities from an acetal group unit quantity in the case of not containing a unit other than the acetal group unit, the remaining acetal group unit quantity can be calculated.

The viscosity of a 10% by mass solution of the polyvinyl acetal resin in the resin composition constituting the polyvinyl acetal resin film in toluene/ethanol=111 (by mass ratio) is 100 to 1000 mPa ·s as measured at 30 rpm and 20°C by using a Brookfield-type (B-type) viscometer. When the viscosity is less than 100 mPa ·s, a laminated glass satisfying heat resistance cannot be obtained, and when the viscosity is more than 1000 mPa -s, it is difficult to obtain good film forming properties.

In a case where a laminated glass is produced in a state in which the polyvinyl acetal resin film and the plasticized polyvinyl acetal resin layer are not in direct contact with each other, or in a case where although the polyvinyl acetal resin film and the plasticized polyvinyl acetal resin layer are partially in direct contact, the plasticizer cannot sufficiently transfer from the plasticized polyvinyl acetal resin layer to the entire polyvinyl acetal resin film, the viscosity of a 10% by mass solution of the polyvinyl acetal resin in the resin composition constituting the polyvinyl acetal resin film in toluene/ethanol=1/1 (by mass ratio) is preferably 300 mPa ·s or less, more preferably 250 mPa s or less, still more preferably 200 mPa ·s, and particularly preferably 180 mPa ·s or less as measured at 30 rpm and 20°C by using the Brookfield-type (B-type) viscometer. When the viscosity is equal to or less than the above upper limit value, a heating temperature or a heating time can be easily set within a desired range when a laminated glass is produced, an unmelted portion of the polyvinyl acetal resin is less likely to remain when the laminated glass is produced, and yellowing of the polyvinyl acetal resin film is less likely to occur. Specific examples of the cases described above include a case where an inorganic material layer or a resin layer which is less likely to penetrate a plasticizer, for example, a functional layer containing a polyester resin, a polyolefin-based resin, or the like is formed on almost the entire surface between the polyvinyl acetal resin film and the plasticized polyvinyl acetal resin layer. The viscosity is preferably 100 mPa ·s or more, more preferably 120 mPa ·s or more, and particularly preferably 150 mPa ·s or more, from the viewpoint of easily obtaining a laminated glass having no unmelted portion of the polyvinyl acetal resin.

In some cases, a laminated glass is produced in a state in which the polyvinyl acetal resin film and the plasticized polyvinyl acetal resin layer are in direct contact with each other. In other cases, even when the polyvinyl acetal resin film and the plasticized polyvinyl acetal resin layer are not in direct contact with each other, the plasticizer can sufficiently transfer from the plasticized polyvinyl acetal resin layer to the entire polyvinyl acetal resin film. In these cases, the viscosity of a 10% by mass solution of the polyvinyl acetal resin in the resin composition constituting the polyvinyl acetal resin film in toluene/ethanol=1/1 (by mass ratio) as measured at 30 rpm and 20°C by using the Brookfield-type (B-type) viscometer is preferably 160 mPa -s or more, more preferably 200 mPa ·s or more, more preferably more than 200 mPa s, more preferably 210 mPa s or more, more preferably 220 mPa ·s or more, more preferably 230 mPa ·s or more, still more preferably 240 mPa s or more, and particularly preferably 265 mPa ·s or more. When the viscosity of the polyvinyl acetal resin is equal to or more than the lower limit value, it is easy to obtain a laminated glass in which glass misalignment is less likely to occur even at high temperature.

In the cases described above, from the viewpoint of capable of sufficiently suppressing or more easily suppressing deformation and destruction of the functional layer or the structure when the laminated glass is produced and capable of sufficiently suppressing or more easily suppressing glass misalignment under high temperature conditions in the obtained laminated glass, the viscosity is preferably more than 200 mPa ·s, more preferably 210 mPa ·s or more, more preferably 220 mPa s or more, more preferably 230 mPa ·s or more, still more preferably 240 mPa s or more, and particularly preferably 265 mPa ·s or more. The viscosity is usually 1000 mPa ·s or less, preferably 800 mPa ·s or less, more preferably 500 mPa s or less, still more preferably 450 mPa .s or less, and particularly preferably 400 mPa ·s from the viewpoint of easily obtaining good film forming properties.

By using the polyvinyl acetal resin produced by use of a polyvinyl alcohol-based resin having a high or low viscosity average polymerization degree as a raw material or a part of the raw material is used alone or in combination, the viscosity of the polyvinyl acetal resin can be adjusted to equal to or less than the above upper limit value and more than the above lower limit value or equal to or more than the lower limit value. In a case where the polyvinyl acetal resin film contains a mixture of polyvinyl acetal resins, the viscosity is the viscosity of such a mixture.

A peak top molecular weight of the polyvinyl acetal resin in the resin composition constituting the polyvinyl acetal resin film is preferably 115,000 to 200,000, more preferably 120,000 to 160,000, and particularly preferably 130,000 to 150,000. When the polyvinyl acetal resin produced using a polyvinyl alcohol-based resin having a high viscosity average polymerization degree as a raw material or a part of the raw material is used alone or in combination, the peak top molecular weight of the polyvinyl acetal resin can be adjusted to within the above range. When the peak top molecular weight of the polyvinyl acetal resin is within the above range, suitable film forming properties and suitable film physical properties (for example, laminate suitability, creep resistance and elongation at break) are more easily obtained.

Molecular weight distribution of the polyvinyl acetal resin in the resin composition constituting the polyvinyl acetal resin film, that is, a ratio (Mw/Mn) of weight average molecular weight (Mw) to number average molecular weight (Mn) is 2.7 or more, more preferably 2.8 or more, and particularly preferably 2.9 or more. By acetalizing a mixture of polyvinyl alcohol-based resins having different viscosity average polymerization degrees or mixing acetalized products of the polyvinyl alcohol-based resins having different viscosity average polymerization degrees, the molecular weight distribution of the polyvinyl acetal resin can be adjusted to equal to or more than the lower limit value. When the molecular weight distribution of the polyvinyl acetal resin is equal to or more than the lower limit value, both film forming properties and suitable film physical properties (for example, laminate suitability, creep resistance and elongation at break) are more easily realized. The upper limit of the molecular weight distribution is not particularly limited. From the viewpoint of ease of film formation, the molecular weight distribution is usually 10 or less and preferably 5 or less.

When the polyvinyl acetal resin film contains two or more different polyvinyl acetal resins, the peak top molecular weight and the molecular weight distribution of at least one polyvinyl acetal resin are preferably within the above range.

The peak top molecular weight and molecular weight distribution can be determined by using gel permeation chromatography (GPC) with polystyrene of known molecular weight as a standard.

The polyvinyl acetal resin film preferably contains uncrosslinked polyvinyl acetal from the viewpoint of more easily obtaining good film forming properties. The polyvinyl acetal resin film may contain cross-linked polyvinyl acetal. Methods for cross-linking polyvinyl acetals are described, for example, in EP 1527107 B1 and WO 2004/063231 A1 (thermal self-cross-linking of polyvinyl acetals containing carboxyl groups), EP 1606325 A1 (polyvinyl acetals cross-linked with polyaldehydes) and WO 2003/020776 A1 (polyvinyl acetal cross-linked with glyoxylic acid). In addition, a method of appropriately adjusting acetalization reaction conditions to control an intermolecular acetal bonding amount to be generated or control a degree of blocking of a remaining hydroxyl group is also useful.

<Plasticizer>

In the present invention, the amount of the plasticizer in the polyvinyl acetal resin film is 0 to 20% by mass based on the total mass of the resin composition constituting the polyvinyl acetal resin film. When the amount of the plasticizer exceeds 20% by mass, deformation and/or disconnection of the functional layer or the conductive layer occur when a laminated glass is produced.

The amount of the plasticizer is preferably 0 to 19% by mass, more preferably 0 to 15% by mass, still more preferably 0 to 10% by mass, and particularly preferably 0 to 5% by mass. When the amount of plasticizer in the polyvinyl acetal resin film is within the above range, a polyvinyl acetal resin film excellent in film forming properties and handleability is more easily produced, and the deformation and disconnection of the functional layer or the conductive layer are more easily suppressed when a laminated glass using the polyvinyl acetal resin film is produced.

When the polyvinyl acetal resin film contains the plasticizer, one or more compounds of the following group are preferably used as the plasticizer.

· Esters of polyvalent aliphatic or aromatic acids. Examples thereof include dialkyl adipates (e.g. dihexyl adipate, di-2-ethylbutyl adipate, dioctyl adipate, di-2-ethyl hexyl adipate, hexyl cyclohexyl adipate, diheptyl adipate, dinonyl adipate, diisononyl adipate, and heptyl nonyl adipate); esters of adipic acid with alcohol or alcohol containing an ether compound [e.g. di(butoxyethyl)adipate, di(butoxyethoxyethyl)adipate]; dialkyl sebacates (e.g. dibutyl sebacate); esters of sebacic acid with alcohol containing an alicyclic or ether compound; esters of phthalic acid (e.g. butyl benzyl phthalate and bis-2-butoxyethyl phthalate); and esters of alicyclic polyhydric carboxylic acid with aliphatic alcohol (e.g. 1,2-cyclohexane dicarboxylic acid diisononyl esters).

· Esters or ethers of polyvalent aliphatic or aromatic alcohols or oligoether glycols with one or more aliphatic or aromatic substituents. Examples thereof include esters of glycerin, diglycol, triglycol, tetraglycol and the like with a linear or branched, aliphatic or alicyclic carboxylic acid. Specific examples thereof include diethylene glycol-bis-(2-ethylhexanoate), triethylene glycol-bis-(2-ethylhexanoate) (hereinafter sometimes referred to as "3GO"), triethylene glycol-bis-(2-ethylbutanoate), tetraethylene glycol-bis-(2-ethylhexanoate), tetraethylene glycol-bis-n-heptanoate, triethylene glycol-bis-n-heptanoate, triethylene glycol-bis-n-hexanoate, tetraethylene glycol dimethyl ether, and dipropylene glycol dibenzoate.

· Phosphate esters of aliphatic or aromatic alcohols. Examples thereof include tris(2-ethylhexyl)phosphate, triethylphosphate, diphenyl-2-ethylhexyl phosphate, and tricresyl phosphate.

· Esters of citric acid, succinic acid, and/or fumaric acid.

A polyester or an oligoester composed of a polyhydric alcohol and a polyvalent carboxylic acid, a terminal esterified product or etherified product thereof, a polyester or an oligoester composed of lactone or hydroxycarboxylic acid, or a terminal esterified product or etherified product thereof may be used as a plasticizer.

When the polyvinyl acetal resin film contains a plasticizer, from the viewpoint of suppressing problems associated with transfer of the plasticizer between the polyvinyl acetal resin and, if laminated, the plasticized polyvinyl acetal resin layer (for example, problems such as a change in physical properties with time), it is preferable to use the same plasticizer as the plasticizer contained in the plasticized polyvinyl acetal resin layer to be laminated or a plasticizer which does not impair physical properties of the plasticized polyvinyl acetal resin layer (for example, heat resistance, light resistance, transparency, and plasticization effect). From such a viewpoint, as plasticizers, triethylene glycol-bis-(2-ethylhexanoate), triethylene glycol-bis(2-ethylbutanoate), tetraethylene glycol-bis-(2-ethylhexanoate), and tetraethylene glycol-bis-n-heptanoate are more preferred, and triethylene glycol-bis-(2-ethylhexanoate) is particularly preferred.

<Additive>

The polyvinyl acetal resin film may further contain another additive. Examples of such an additive include water, ultraviolet absorbers, antioxidants, adhesion regulators, brighteners or fluorescent brighteners, stabilizers, dyes, processing aids, heat shielding materials, organic or inorganic nanoparticles, calcined silicic acid, and surfactants.

In order to solve the problems of the present invention, it is necessary to sufficiently reduce the amount of gel in the polyvinyl acetal resin film. This is because when the gel is formed by, for example, decomposition of the polyvinyl acetal resin, due to the formation of defects in the form of projection on the polyvinyl acetal resin film, the Sm value tends to be low and also the Rz value tends to be low. In order to reduce the amount of the gel in the polyvinyl acetal resin film, it is useful to suppress the formation of the gel at the time of pelletization or film formation of the polyvinyl acetal resin, and for that purpose, it is useful to add a stabilizer such as an antioxidant to the resin composition constituting the polyvinyl acetal resin film.

Examples of the antioxidant include phenol-based antioxidants, phosphorus-based antioxidants, and sulfur-based antioxidants. Among these antioxidants, phenol-based antioxidants are preferred, and alkyl-substituted phenol-based antioxidants are particularly preferred.

Examples of the phenol-based antioxidant include acrylate-based compounds, such as 2-t-butyl-6-(3-t-butyl-2-hydroxy-5-methylbenzyl)-4-methylphenyl acrylate and 2,4-di-t-amyl-$\beta$-(1-(3,5-di-t-amyl-2-hydroxyphenyl)ethyl)phenyl acrylate; alkyl-substituted phenol-based compounds, such as 2,6-di-t-butyl-4-methylphenol, 2,6-di-t-butyl-4-ethylphenol, octadecyl-3-(3,5-)di-t-butyl-4-hydroxyphenyl)propionate, 2,2'-methylene-bis(4-methyl-6-t-butylphenol), 4,4'-butylidene-bis(4-methyl-6-t-butylphenol), 4,4'-butylidene-bis(6-t-butyl-m-cresol), 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyl oxy)-1,1-dimethylethyl)-2,4,8,10-tetraoxaspiro[5,5]undecane, 1,1,3-tris(2-methyl-4-hydroxy-5-t-butylphenyl)butane, 1,3,5-trimethyl-2,4,6-tris(3,5-di-t-butyl-4-hydroxybenzyl) benzene, tetrakis(methylene-3-(3',5'-di-t-butyl-4'-hydroxyphenyl)propionate)methane, and triethylene glycol bis(3-(3-t-butyl-4-hydroxy-5-methylphenyl)propionate); and triazine group-containing phenol-based compounds, such as 6-(4-hydroxy-3,5-di-t-butylanilino)-2,4-bis-octylthio-1,3,5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5-triazine, and 2-octylthio-4,6-bis-(3,5-di-t-butyl-4-oxyanilino)-1,3,5-triazine.

Examples of the phosphorus-based antioxidant include monophosphite-based compounds, such as triphenyl phosphite, diphenylisodecyl phosphite, phenyldiisodecyl phosphite, tris(nonylphenyl) phosphite, tris(dinonylphenyl) phosphite, tris(2-t-butyl-4-methylphenyl) phosphite, tris(cyclohexylphenyl) phosphite, 2,2-methylenebis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide, and 10-decyloxy-9,10-dihydro-9-oxa-10-phosphaphenanthrene; and diphosphite-based compounds, such as 4,4'-butylidene-bis(3-methyl-6-t-butylphenyl-di-tridecylphosphite), 4,4'-isopropylidene-bis(phenyl-di-alkyl($C_{12}$-$C_{15}$) phosphite), 4,4'-isopropylidenebis(diphenylmonoalkyl($C_{12}$-$C_{15}$)phosphite), 1,1,3-tris(2-methyl-4-ditridecylphosphite-5-t-butylphenyl)butane, and tetrakis(2,4-di-t-butylphenyl)-4,4'-biphenylene phosphite. Among these phosphorus-based antioxidants, monophosphite-based compounds are preferred.

Examples of the sulfur-based antioxidant include dilauryl 3,3'-thiodipropionate, distearyl 3,3-thiodipropionate, lauryl stearyl 3,3'-thiodipropionate, pentaerythritol-tetrakis-($\beta$-lauryl-thiopropionate), and 3,9-bis(2-dodecylthioethyl)-2,4,8,10-tetraoxaspiro[5.5]undecane.

These antioxidants can be used solely or in combination of two or more thereof. The addition amount of the antioxidant is preferably 0.001 parts by mass or more and more preferably 0.01 parts by mass or more, with respect to 100 parts by mass of the polyvinyl acetal resin. When the amount of the antioxidant is equal to or more than the lower limit value, the formation of the gel by decomposition of the polyvinyl acetal resin and the like is more easily suppressed effectively. The addition amount of the antioxidant is usually 5 parts by mass or less, preferably 1 part by mass or less, and more preferably 0.1 parts by mass or less, with respect to 100 parts by mass of the polyvinyl acetal resin. Although the addition amount of the antioxidant may be more than 5 parts by mass, remarkable effects on the suppression of gel formation are not expected.

In order to prevent oxidative deterioration of the polyvinyl acetal resin, it is preferable that at least a part of a production process of the polyvinyl acetal resin film is performed under a nitrogen atmosphere, and, for example, it is also preferable to carry out nitrogen substitution of the vicinity of a feed opening and a discharge port when the polyvinyl acetal resin film is produced using an extruder.

Other stabilizers include ultraviolet absorbers, ultraviolet screening agents, and light stabilizers.

Examples of the ultraviolet absorber include benzotriazole-based ultraviolet absorbers, such as 2-(5-methyl-2-hydroxyphenyl)benzotriazole, 2-[2-hydroxy-3,5-bis($\alpha,\alpha'$-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-5-methyl-2-hydroxyphenyl)-5-chlorobenzotriazole, 2-(3,5-di-t-amyl-2-hydroxyphenyl)benzotriazole, and 2-(2'-hydroxy-5'-t-octylphenyl)benzotriazole; hindered amine-based ultraviolet absorbers, such as 2,2,6,6-tetramethyl-4-piperidyl benzoate, bis(2,2,6,6-tetramethyl-4-piperidyl)sebacate, bis(1,2,2,6,6-pentamethyl-4-piperidyl)-2-(3,5-di-t-butyl-4-hydroxybenzyl)-2-n-butylmalonate, and 4-(3-(3,5-di-t-butyl-4-hydroxyphenyl)propionyloxy)-1-(2-(3-(3,5-di-t-butyl-4-hydroxyphenyl)propionyloxy)ethyl)-2,2,6,6-tetramethylpiperidine; benzoate-based ultraviolet absorbers, such as 2,4-di-t-butylphenyl-3,5-di-t-butyl-4-hydroxybenzoate and hexadecyl-3,5-di-t-butyl-4-hydroxybenzoate; and malonic acid ester-based ultraviolet absorbers.

Examples of the malonic acid ester-based ultraviolet absorber include dimethyl 2-(p-methoxybenzylidene)malonic acid, tetraethyl-2,2-(1,4-phenylenedimethylidene) bismalonate, and 2-(p-methoxybenzylidene)-bis(1,2,2,6,6-pentamethyl-4-piperidinyl) malonate. Commercially available malonic acid ester-based ultraviolet absorbers may be used, and examples thereof include Hostavin B-CAP, Hostavin PR-25, and Hostavin PR-31 (all manufactured by Clariant).

Examples of the ultraviolet screening agent include oxanilide compounds, for example, a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant).

The addition amount of the ultraviolet absorber or the ultraviolet screening agent is preferably 10 ppm or more and more preferably 100 ppm or more on a mass basis with respect to the polyvinyl acetal resin contained in the polyvinyl acetal resin film. When the addition amount of the ultraviolet absorber or the ultraviolet screening agent is equal to or more than the lower limit value, a sufficient effect is more easily exhibited. The addition amount of the ultraviolet absorber or the ultraviolet screening agent is usually 50,000 ppm or less and preferably 10,000 ppm or less on a mass basis with respect to the polyvinyl acetal resin contained in the polyvinyl acetal resin film. Although the addition amount of the ultraviolet absorber or the ultraviolet screening agent may be more than 50,000 ppm, remarkable effects on the suppression of gel formation are not expected.

The ultraviolet absorber or the ultraviolet screening agent can be used solely or in combination of two or more thereof.

As the photostabilizer, a hindered amine-based stabilizer may be used, and examples of commercial items thereof include "Adecastab LA-57 (a trade name)", manufactured by Adeka Corporation.

In an embodiment in which the polyvinyl acetal resin film has a conductive layer as a functional layer, in order to suppress corrosion of the conductive layer, it is preferable that the polyvinyl acetal resin film contain a corrosion inhibitor. The amount of the corrosion inhibitor contained in the polyvinyl acetal resin film is preferably 0.005 to 5% by mass based on the mass of the resin composition constituting the polyvinyl acetal resin film. Examples of the corrosion inhibitor include substituted or unsubstituted benzotriazoles.

<Method of producing polyvinyl acetal resin film>

The method of producing a polyvinyl acetal resin film is not particularly limited. It is possible to fabricate a polyvinyl acetal resin film by blending the resin, optionally a predetermined amount of a plasticizer, and other additives if necessary, uniformly kneading the mixture, and then forming the mixture into a sheet (film) by a publicly-known film forming method such as an extrusion method, a calender method, a pressing method, a casting method and an inflation method.

Among the publicly-known film forming methods, a method to produce a film using an extruder is especially suitably employed. The temperature of the resin being extruded is preferably 150 to 250°C and more preferably 170 to 230°C. When the resin temperature is too high, a polyvinyl acetal resin will undergo decomposition, and the content of volatile substances increases. When the temperature is too low, the content of volatile substances increases as well. In order to efficiently remove the volatile substances, it is preferable to remove the volatile substances from a vent port of the extruder by reducing the pressure.

In the polyvinyl acetal resin film of the present invention, a value indicating heat creep resistance (hereinafter referred to as "heat creep resistance value (1)") measured by the following measurement method (1) is preferably 10 mm or less, more preferably 5 mm or less, still more preferably 4 mm or less, and particularly preferably 3 mm or less.

<Method (1) of measuring heat creep resistance value (1)>

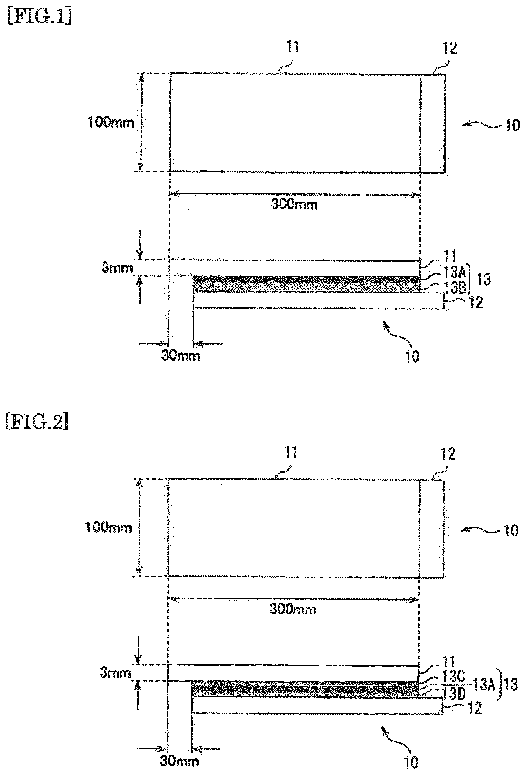

First, a polyvinyl acetal resin film, and one sheet of a 0.76 mm thick plasticized polyvinyl butyral resin layer which contains 72% by mass of polyvinyl butyral resin having an acetalization degree of 69 to 71 mol% and containing a vinyl acetate unit as an acetyl group in an amount of 1 mol% or less and 28% by mass of triethylene glycol-bis-(2-ethylhexanoate) are cut to dimensions of 100 mm wide and 270 mm long. As illustrated in Fig. 1, the cut polyvinyl acetal resin film and the cut plasticized polyvinyl butyral resin layer are layered so as to fit between glass A and glass B that have a width of 100 mm, a length of 300 mm and a thickness of 3 mm and are shifted by 30 mm in the length direction, and are arranged in the order of the following "Configuration 1". The layered materials are bonded at 140°C using a vacuum laminator and then treated at 140°C and 1.2 MPa for 30 minutes using an autoclave to produce a laminated glass.

[Configuration 1] Glass A (3 mm thick)/polyvinyl acetal resin film/plasticized polyvinyl butyral resin layer (0.76 mm thick)/glass B (3 mm thick)

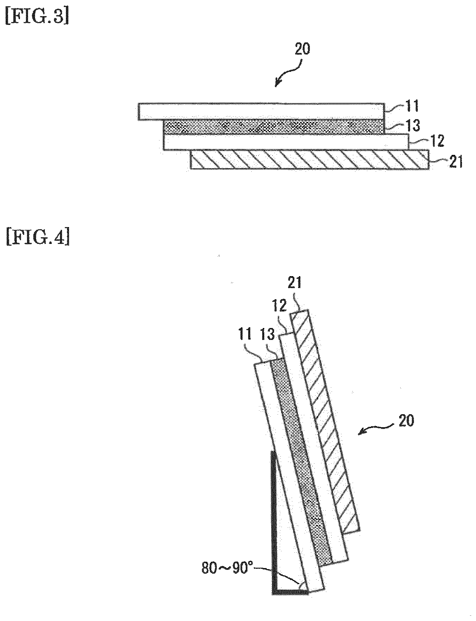

Subsequently, as illustrated in Fig. 3, a surface of the glass B opposite to the surface bonded to the plasticized polyvinyl butyral resin layer is bonded with an iron plate of 1 kg with an adhesive. The laminated glass is left in a thermostat at 100°C for 1 week, as illustrated in Fig. 4, in a state in which a portion protruding 30 mm in the length direction faces upward, and the glass A is fixed such that the angle of the sample with the iron plate is 80 to 90° with respect to a horizontal plane and a portion of the glass B to which the iron plate is bonded serves as an upper portion or an upper surface of the sample. Thereafter, a distance (mm) by which the glass B has deviated is measured, and this value is taken as the heat creep resistance value (1). The same heat creep resistance value (1) can be obtained even when the angle of the sample with the iron plate with respect to the horizontal plane is any angle from 80 to 90°. Usually, the heat creep resistance value (1) is measured at an angle of 85°.

When the heat creep resistance value (1) is equal to or less than the above value, it is easy to suppress deformation and destruction of the functional layer or the conductive layer when the laminated glass is produced and to suppress misalignment of a glass of the obtained laminated glass under high temperature conditions.

In the polyvinyl acetal resin film of the present invention, a value indicating heat creep resistance (hereinafter referred to as "heat creep resistance value (2)") measured by the following measurement method (2) is preferably 10 mm or less, more preferably 5 mm or less, still more preferably 4 mm or less, and particularly preferably 3 mm or less.

<Method (2) of measuring heat creep resistance value (2)>

First, a polyvinyl acetal resin film, and two sheets of 0.38 mm thick plasticized polyvinyl butyral resin layers which contain 72% by mass of polyvinyl butyral resin having an acetalization degree of 69 to 71 mol% and containing a vinyl acetate unit as an acetyl group in an amount of 1 mol% or less and 28% by mass of triethylene glycol-bis-(2-ethylhexanoate) are cut to dimensions of 100 mm wide and 270 mm long. As illustrated in Fig. 2, the cut polyvinyl acetal resin film and the cut plasticized polyvinyl butyral resin layers are arranged in the order of the following "Configuration 2" in a state in which the polyvinyl acetal resin film is sandwiched between two sheets of the plasticized polyvinyl butyral resin layers such that the cut samples fit between glass A and glass B that have a width of 100 mm, a length of 300 mm and a thickness of 3 mm and are shifted by 30 mm in the length direction. The layered materials are bonded at 140°C using a vacuum laminator and then treated at 140°C and 1.2 MPa for 30 minutes using an autoclave to produce a laminated glass.

[Configuration 2] Glass A (3 mm thick)/plasticized polyvinyl butyral resin layer (0.38 mm thick)/polyvinyl acetal resin film/plasticized polyvinyl butyral resin layer (0.38 mm thick)/glass B (3 mm thick)

Subsequently, as illustrated in Fig. 3, a surface of the glass B opposite to the surface bonded to the plasticized polyvinyl butyral resin layer is bonded with an iron plate of 1 kg with an adhesive. The laminated glass is left in a thermostat at 100°C for 1 week, as illustrated in Fig. 4, in a state in which a portion protruding 30 mm in the length direction faces upward, and the glass A is fixed such that the angle of the sample with the iron plate is 80 to 90° with respect to a horizontal plane and a portion of the glass B to which the iron plate is bonded serves as an upper portion or an upper surface of the sample. Thereafter, a distance (mm) at which the glass B has deviated is measured, and this value is taken as the heat creep resistance value (2). The same heat creep resistance value (2) can be obtained even when the angle of the sample with the iron plate with respect to the horizontal plane is any angle from 80 to 90°. Usually, the heat creep resistance value (2) is measured at an angle of 85°.

When the heat creep resistance value (2) is equal to or less than the above value, it is easy to suppress deformation and destruction of the functional layer or the conductive layer when the laminated glass is produced and to suppress misalignment of a glass of the obtained laminated glass under high temperature conditions.

In the polyvinyl acetal resin film of the present invention, the mean spacing Sm value of unevenness of at least one side is 500 $\mu$m or more. When the Sm value is less than 500 $\mu$m, it is not possible to obtain the effect of the present invention of providing a polyvinyl acetal resin film in which, when a linear conductive material of a conductive layer is formed on a surface of the polyvinyl acetal resin film, peeling or partial thinning of the linear conductive material is less likely to occur, and defects such as disconnection or formation of a high resistance portion during lamination are less likely to occur. The Sm value is preferably 1000 $\mu$m or more, more preferably 1300 $\mu$m or more, more preferably 1450 $\mu$m or more, still more preferably 2000 $\mu$m or more, and particularly preferably 3000 $\mu$m or more. When the Sm value is equal to or more than the above value, when the polyvinyl acetal resin film and a metal foil are applied to each other, a minute non-bonded portion is more easily reduced. Consequently, disconnection caused by peeling of the linear conductive material after etching of the metal foil can be more easily suppressed, and also it becomes easy to suppress formation of a partial high resistance portion or disconnection during production of a laminated glass due to the fact that an etching solution that has reached the non-bonded portion during etching of the metal foil partially reduces a cross-sectional area of the linear conductive material. As a result, when the linear conductive material is energized in the obtained laminated glass, uniform heating is more easily realized. The Sm value is measured according to JIS B0601-1994 using a surface roughness meter or a laser microscope. Measurement with a contact type surface roughness tester is preferred.

In the polyvinyl acetal resin film of the present invention, the value of ten-point average roughness Rz of at least one side is preferably 20 $\mu$m or less, more preferably 5 $\mu$m or less, still more preferably 3 $\mu$m or less, and particularly preferably 2 $\mu$m or less. When the Rz value is equal to or less than the above value, uniform printing, coating or lamination can become possible, and unevenness in bonding between the polyvinyl acetal resin film and ink or metal foil is more easily suppressed. The Rz value is measured according to JIS B0601-1994 using a surface roughness meter or a laser microscope. Measurement with a contact type surface roughness tester is preferred.

In the polyvinyl acetal resin film of the present invention, the ratio Sm/Rz of the mean spacing Sm value of unevenness to the value of ten-point average roughness Rz of at least one side is 200 or more. The ratio Sm/Rz is preferably 300 or more, more preferably 500 or more, still more preferably 1000 or more, and particularly preferably 1500 or more. When Sm/Rz is equal to or more than the above value, a minute non-bonded region between the polyvinyl acetal resin film and ink or metal foil is more easily reduced. Consequently, for example, as described above, the disconnection can be more easily suppressed, and the formation of the partial high resistance portion can be more easily suppressed.

As a method of adjusting the mean spacing Sm value of unevenness of the polyvinyl acetal resin film of the present invention to equal to or more than the above value and adjusting the value of ten-point average roughness Rz to equal to or less than the above value, a melt extrusion method, a solvent cast method or the like can be adopted. In the melt extrusion method, a method using a T-die, a method of inflation molding, or the like can be used. It is preferable to form a film by extruding a melt from the T-die using a smooth (mirror surface) cooling roll represented by a mirror surface metal cooling roll or the like or an embossing roll corresponding to the target Sm value or Rz value. From the viewpoint of more easily obtaining a polyvinyl acetal resin film having a desired Sm value, Rz value or Sm/Rz, it is preferable to use an elastic roll for at least one of roll pairs during film formation, and it is more preferable to use a metal elastic roll. From the same point of view, the temperature of the polyvinyl acetal resin film at the time of leaving the cooling roll is preferably lower by 5°C or more than a glass transition temperature of the polyvinyl acetal resin contained in the polyvinyl acetal resin film, more preferably lower by 10°C or more, still more preferably lower by 15°C or more, and particularly preferably lower by 20°C or more. When the temperature of the polyvinyl acetal resin film at the time of leaving the cooling roll and the above glass transition temperature satisfy the above relationship, surface roughness due to tackiness of the polyvinyl acetal resin film at the time of leaving the cooling roll, or thickness unevenness due to shrinkage of the film is more easily reduced. When two or more different polyvinyl acetal resins are contained in the polyvinyl acetal resin film, the glass transition temperature of at least one polyvinyl acetal resin and the temperature of the polyvinyl acetal resin film at a leaving point from the cooling roll preferably satisfy the above relationship.

Although the polyvinyl acetal resin film may have a multicomponent layer separation structure, in the layer separation structure, the average particle size of the island components is preferably less than 100 nm and more preferably less than 80 nm, and it is particularly preferable that no sea-island layer separation structure is shown. By not showing the sea-island layer separation structure or showing a sufficiently fine particle size, it is possible to ensure transparency which can be used for a car windshield and the like.

<Functional layer>

In one embodiment, the polyvinyl acetal resin film of the present invention has a functional layer on at least one side. A functional layer is a layer which provides a specific function to a laminated glass.

One or more functional layers may be provided.

When the polyvinyl acetal resin film has a plurality of functional layers, the types of respective functional layers may be the same or different.

In a surface having the functional layer of the polyvinyl acetal resin film, the polyvinyl acetal resin film may have the functional layer on the entirety of the surface, or may have the functional layer on part of the surface. In an embodiment of laminating a plasticized polyvinyl acetal resin layer as described later to produce a laminated glass, it is preferable that the polyvinyl acetal resin film has the functional layer on part of the surface so that a plasticizer in the plasticized polyvinyl acetal resin layer can transfer to the polyvinyl acetal resin film. However, when the functional layer does not inhibit the transfer of the plasticizer from the plasticized polyvinyl acetal resin layer to the polyvinyl acetal resin film, the present invention is not limited thereto.

The polyvinyl acetal resin film preferably has the Sm value, Rz value, or Sm/Rz described above from the viewpoint of more easily obtaining good bonding with the functional layer on the surface bonded to the functional layer. In a case where the functional layer is a conductive layer, disconnection or formation of a high resistance portion during lamination for producing a laminated glass are less likely to occur due to the fact that the Sm value of the surface of the polyvinyl acetal resin film to be bonded to the conductive layer is 500 μm or more, and the ratio Sm/Rz of the mean spacing Sm value of unevenness to the value of ten-point average roughness Rz is 200 or more.

The functional layer is preferably one or more selected from the group consisting of a conductive layer, a specific wavelength electromagnetic wave reflection layer such as an infrared reflection layer or an ultraviolet reflection layer, a color correction layer, an infrared absorption layer, an ultraviolet absorption layer, a fluorescent/light emitting layer, a sound insulation layer, an electrochromic layer, a photochromic layer, a thermochromic layer, a designability layer, and a high elastic modulus layer.

In an embodiment, the functional layer is preferably a conductive layer.

The thickness of the conductive layer is preferably 1 to 30 μm, more preferably 2 to 15 μm, and particularly preferably 3 to 10 μm, from the viewpoint of electrical resistance, ease of production, and the like. The thickness of the conductive layer can be measured using a thickness gauge, a laser microscope, or the like.

The conductive layer preferably has a linear, grid-like or net-like shape from the viewpoint of electrical resistance, heat generation performance, electromagnetic wave absorbability, optical properties, and the like. Here, examples of the linear shape include straight, wavy and zigzag shapes. In one conductive layer, a single shape may exist, or a plurality of shapes may be mixed.

In an embodiment, for example, an embodiment in which a conductive layer is formed by a printing method, and a laminated glass in a region where ensuring of forward visibility is not important is partially heated or used as a sensor or an antenna, it is preferable that the conductive layer is formed of a plurality of linear conductive materials having a line width of 0.01 to 5 mm from the viewpoint of ensuring a sufficient calorific value and ease of production. That is, the line width of the linear conductive material constituting the linear, grid-like or net-like shape described above is preferably 0.01 to 5 mm. The line width is more preferably 0.02 to 2 mm and particularly preferably 0.03 to 1 mm.

In another embodiment, for example, an embodiment in which laminated glass is entirely heated, the conductive layer is preferably formed of a plurality of linear conductive materials having a line width of 1 to 30 μm from the viewpoint of more easily ensuring both a sufficient calorific value and good forward visibility. That is, the line width of the linear conductive material constituting the linear, grid-like or net-like shape described above is preferably 1 to 30 μm. The line width is more preferably 2 to 15 μm and particularly preferably 3 to 12 μm.

The conductive material forming the conductive layer preferably comprises silver or copper, and is more preferably made of silver or copper, from the viewpoint of ease of securing electrical resistance or a calorific value and ease of production.

In an embodiment in which the conductive layer is based on metal foil, one or both sides of the conductive layer are preferably treated to have low reflectance.

In the present invention, the expression "being treated to have low reflectance" means that treatment is performed such that a visible light reflectance measured according to JIS R 3106 is 30% or less. It is more preferable that the treatment is performed such that the visible light reflectance is 10% or less from the viewpoint of forward visibility. When the visible light reflectance is equal to or less than the above upper limit value, when producing a vehicle glass by laminating a polyvinyl acetal resin film having a conductive layer and a plasticized polyvinyl acetal resin layer as described later, a desired visible light reflectance is more easily obtained.

Examples of the low reflectance treatment include blackening treatment (darkening treatment), browning treatment, and plating treatment. From the viewpoint of process passability, the low reflectance treatment is preferably blackening treatment. Thus, from the viewpoint of good forward visibility, it is particularly preferable that one or both sides of the conductive layer is blackened so that the visible light reflectance is 10% or less. Specifically, the blackening treatment can be performed using an alkaline blackening solution or the like.

<Method of applying functional layer to polyvinyl acetal resin film>

The method of applying a functional layer to a polyvinyl acetal resin film is not particularly limited. Examples thereof include a method of applying a material constituting the functional layer on at least one side of the polyvinyl acetal resin film by coating, printing or lamination.

The method of applying the material by coating, printing or lamination is not particularly limited.

Examples of the method of coating with the material include a method of coating the functional layer with a melt of a resin composition constituting the polyvinyl acetal resin film (for example, a method of melt-extruding the resin composition on the functional layer, or a method of coating the functional layer with the resin composition by knife coating or the like); a method of applying the functional layer to the polyvinyl acetal resin film by vapor deposition, sputtering or electric deposition; a method in which, in a case where the functional layer is composed of a resin composition, a resin composition constituting the polyvinyl acetal resin film and the resin composition constituting the functional layer are simultaneously extruded; and a method of dipping the polyvinyl acetal resin film in a solution of the resin composition constituting the functional layer.

Examples of the method of printing the material include screen printing, flexographic printing, and gravure printing. In the printing method, an ink is used which is dried or cured by heat or light before the polyvinyl acetal resin film having the functional layer is laminated in a subsequent step.

Examples of the method of laminating the material include a method of layering a functional layer and a polyvinyl acetal resin film and thermocompression bonding the same; a method of applying a solvent, or a resin composition solution containing a solvent and a resin contained in the polyvinyl acetal resin film, on one or both of the functional layer and the polyvinyl acetal resin film or injecting the solvent or solution between the functional layer and the polyvinyl acetal resin film to bond the functional layer and the polyvinyl acetal resin film; and a method of bonding the functional layer and the polyvinyl acetal resin film with an adhesive. As the adhesive used in the method of bonding using the adhesive, an adhesive generally used in the technical field may be used, and examples thereof include acrylate-based adhesives, urethane-based adhesives, epoxy-based adhesives and hot melt adhesives. In an embodiment in which optically excellent characteristics are required, from the viewpoint that a haze derived from an adhesive does not occur, a method of bonding the functional layer and the polyvinyl acetal resin film without using an adhesive is preferred.

In an embodiment in which the functional layer is a conductive layer, the ink used in the printing method includes conductive particles and/or conductive fibers. The conductive particles or conductive fibers are not particularly limited. Examples thereof include metal particles (including those in the form of nanowires) (e.g. particles of gold, silver, copper, zinc, iron or aluminum); metal-coated particles or fibers (e.g. silver-plated glass fibers or glass spheres); conductive carbon black, carbon nanotubes, and particles or fibers of graphite or graphene. Furthermore, the conductive particles may be particles of a semiconductor, such as particles of conductive metal oxide, for example, particles of indium-doped tin oxide, indium-doped zinc oxide or antimony-doped tin oxide. From the viewpoint of conductivity, the ink preferably contains silver particles, copper particles and/or carbon nanotubes, and more preferably contains silver particles or copper particles.

In an embodiment in which the conductive layer is based on metal foil, the step of bonding the metal foil and the polyvinyl acetal resin film is performed, for example, by the following methods (I) to (III):

(I) a method of layering the polyvinyl acetal resin film and the metal foil and thermocompression bonding the same;
(II) a method of covering and bonding a melt of a resin composition constituting the polyvinyl acetal resin film on the metal foil, for example, a method of melt-extruding the resin composition on the metal foil, or a method of coating the metal foil with the resin composition by knife coating or the like; and
(III) a method of applying a solvent, or a resin composition solution or dispersion containing a solvent and a resin contained in the polyvinyl acetal resin film, on one or both of the metal foil and the polyvinyl acetal resin film or injecting the solvent, solution or dispersion between the metal foil and the polyvinyl acetal resin film to bond the metal foil and the polyvinyl acetal resin film.

Although the bonding temperature during thermocompression bonding in the method (I) depends on the type of resin contained in the polyvinyl acetal resin film, the bonding temperature is usually 90 to 170°C, preferably 100 to 160°C, more preferably 110 to 155°C, and still more preferably 110 to 150°C. When the bonding temperature is within the above range, good bonding strength is more easily obtained.

The resin temperature during extrusion in the method (II) is preferably 150 to 250°C and more preferably 170 to 230°C, from the viewpoint of reducing the content of volatile substances in the polyvinyl acetal resin film. In order to efficiently remove the volatile substances, it is preferable to remove the volatile substances from a vent port of an extruder by reducing the pressure.

As the solvent in the method (III), it is preferable to use a plasticizer which is usually used for polyvinyl acetal resin. As such a plasticizer, those described in the above paragraph <Plasticizer> can be used.

A step of forming a desired shape of the conductive layer from the obtained polyvinyl acetal resin film with the metal foil can be performed using a publicly-known photolithography method. In the step, for example as mentioned in the examples described later, first, a dry film resist is laminated on the metal foil of the polyvinyl acetal resin film with metal foil, and then an etching resistance pattern is formed using a photolithography method, and subsequently, the polyvinyl acetal resin film to which the etching resistance pattern is imparted is immersed in a copper etching solution to form the shape of the conductive layer, and then a remaining photoresist layer is removed by a publicly-known method.

<Laminate>

The present invention also relates to a laminate having a polyvinyl acetal resin film having the functional layer between a plurality of transparent substrates.

In the embodiment in which the functional layer is a conductive layer, each linear conductive material of the conductive layer in the laminate is connected to a bus bar. As the bus bar, a bus bar generally used in the technical field is used, and preferred examples thereof include a metal foil or a metal plate made of copper, aluminum and silver, a cured product of an ink containing these metals, and a tape of the metal foil thereof having a conductive adhesive layer. When the conductive layer is based on metal foil, the bus bar may be formed by leaving a portion of the metal foil as a bus bar at the same time as forming the shape of the conductive layer. When the conductive layer is formed by a printing method, the bus bar may be formed by printing the bus bar at the same time as printing the shape of the conductive layer. Since power feeders are connected to the bus bars respectively and are connected to a power supply, current is supplied to the conductive layer.

From the viewpoint of transparency, weatherability, and mechanical strength, the transparent substrate is preferably inorganic glass (sometimes referred to simply as "glass" in the present specification), or organic glass such as a methacrylic resin sheet, a polycarbonate resin sheet, a polystyrene-based resin sheet, a polyester-based resin sheet or a polycycloolefin-based resin sheet, more preferably inorganic glass, a methacrylic resin sheet or a polycarbonate resin sheet, and particularly preferably inorganic glass. The inorganic glass is not particularly limited, and examples thereof include float glass, tempered glass, semi-tempered glass, chemically tempered glass, green glass, and quartz glass.

In a case where the laminate has a conductive layer as a functional layer, the conductive layer may be in contact with the transparent substrate, a plasticized polyvinyl acetal resin layer described later, or another functional layer.

In a case where the transparent substrate is a glass, if the conductive layer is in direct contact with the glass, due to insufficient sealing of the bus bar and/or the conductive layer, moisture may intrude to cause corrosion of the bus bar and/or the conductive layer, or air may be left during production of the laminate which provides remaining of bubbles and cause of peeling. Therefore, it is preferable that the conductive layer is not in direct contact with the glass.

Particularly in a vehicle glass, especially a vehicle windshield, in the case of using the polyvinyl acetal resin film of the present invention, from the viewpoint of forward visibility, it is preferable that the conductive layer is arranged such that the surface treated to have low reflectance of the conductive layer is on the side of persons on board.

In a case where the laminate has a conductive layer as a functional layer, water may intrude from an end of the laminate to cause corrosion of the conductive layer. Therefore, it is preferable that the conductive layer is arranged 1 cm or more inward of the end of the laminate.

<Plasticized polyvinyl acetal resin layer>

The polyvinyl acetal resin film of the present invention can be used solely, but is more preferably used in combination with the plasticized polyvinyl acetal resin layer. The present invention also relates to a laminate having the polyvinyl acetal resin film having the functional layer and a plasticized polyvinyl acetal resin layer between a plurality of transparent substrates. From the viewpoint of penetration resistance of a laminated glass, it is preferable that one or more plasticized polyvinyl acetal resin layers are arranged in addition to the polyvinyl acetal resin film having the functional layer between the plurality of transparent substrates. That is, in a preferred embodiment, the laminate of the present invention has the polyvinyl acetal resin film having the functional layer or the conductive layer and the plasticized polyvinyl acetal resin layer between the plurality of transparent substrates. In this case, the plasticized polyvinyl acetal resin layer is preferably in direct contact with the polyvinyl acetal resin film of the present invention, and is more preferably in direct contact with the functional layer or the conductive layer of the polyvinyl acetal resin film of the present invention.

The plasticized polyvinyl acetal resin layer contains a polyvinyl acetal resin.

The plasticized polyvinyl acetal resin layer may contain one polyvinyl acetal resin or two or more polyvinyl acetal resins which differ from each other in any one or more of a viscosity average polymerization degree, an acetalization degree, an acetyl group amount, a hydroxyl group amount, an ethylene content, a molecular weight of aldehyde used for acetalization, and a chain length.

The polyvinyl acetal resin can be produced by a method similar to the method described in the above paragraph <Resin used to constitute polyvinyl acetal resin film>, for example.

A preferable acetyl group amount in the polyvinyl acetal resin used to constitute the plasticized polyvinyl acetal resin layer is as follows. That is, when a repeat unit is assumed to be a unit comprising two carbon atoms of the main chain in the polyvinyl alcohol resin which is a raw material for producing the polyvinyl acetal resin (for example, a vinyl alcohol unit, a vinyl acetate unit, and an ethylene unit), the vinyl acetate unit is in an amount of preferably 0.1 to 20 mol% and more preferably 0.5 to 3 mol% or 5 to 8 mol% based on the repeat unit. The acetyl group amount can be adjusted within the above range by appropriately adjusting the saponification degree of the polyvinyl alcohol-based resin of the raw material. When the plasticized polyvinyl acetal resin layer contains the polyvinyl acetal resin in which the acetyl group amount is within the above range, a plasticized polyvinyl acetal resin layer having excellent compatibility with a plasticizer is more easily obtained. When the plasticized polyvinyl acetal resin layer contains two or more different polyvinyl acetal resins, the acetyl group amount of at least one polyvinyl acetal resin is preferably within the above range.

The acetalization degree of the polyvinyl acetal resin is not particularly limited. The acetalization degree is preferably 40 to 86 mol%, more preferably 45 to 84 mol%, more preferably 50 to 82 mol%, still more preferably 60 to 82 mol%, and particularly preferably 68 to 82 mol%. The acetalization degree of the polyvinyl acetal resin can be adjusted within the above range by appropriately adjusting the amount of aldehyde used in acetalizing the polyvinyl alcohol-based resin. When the acetalization degree is within the above range, it is easy to obtain a plasticized polyvinyl acetal resin layer excellent in penetration resistance or bondability with a glass in a laminated glass. In a case where the plasticized polyvinyl acetal resin layer contains two or more different polyvinyl acetal resins, the acetalization degree of at least one polyvinyl acetal resin is preferably within the above range.

The hydroxyl group amount of the polyvinyl acetal resin is preferably 6 to 26% by mass, more preferably 12 to 24% by mass, more preferably 15 to 22% by mass, and particularly preferably 18 to 21% by mass as the mass of the vinyl alcohol unit. When the hydroxyl group amount is within the above range, a laminated glass excellent in penetration resistance, bondability, or sound insulation is more easily obtained. On the other hand, in order to additionally impart sound insulation performance, the preferable range is 6 to 20% by mass, more preferably 8 to 18% by mass, still more preferably 10 to 15% by mass, and particularly preferably 11 to 13% by mass. The hydroxyl group amount can be adjusted within the above range by adjusting the amount of aldehyde used in acetalizing the polyvinyl alcohol-based resin. When the plasticized polyvinyl acetal resin layer contains two or more different polyvinyl acetal resins, the hydroxyl group amount of at least one polyvinyl acetal resin is preferably within the above range.

The polyvinyl acetal resin can be measured by the "Testing Methods for Polyvinyl Butyral" of JIS K 6728 or a nuclear magnetic resonance method (NMR).

The plasticized polyvinyl acetal resin layer preferably contains uncrosslinked polyvinyl acetal from the viewpoint of more easily obtaining good film forming properties and laminatability, and from the viewpoint of more easily reducing head impact at the time of collision in a vehicle glass comprising the plasticized polyvinyl acetal resin layer. The plasticized polyvinyl acetal resin layer may contain cross-linked polyvinyl acetal. A method for cross-linking polyvinyl acetal is exemplified in the above paragraph <Resin used to constitute polyvinyl acetal resin film>.

The plasticized polyvinyl acetal resin layer contains a plasticizer in addition to the polyvinyl acetal resin. In an initial state before lamination of layers, the content of the plasticizer is preferably 16.0% by mass or more, more preferably 16.1 to 36.0% by mass, still more preferably 22.0 to 32.0% by mass, and particularly preferably 26.0 to 30.0% by mass based on the total mass of the resin composition constituting the plasticized polyvinyl acetal resin layer. When the plasticizer content is within the above range, a laminated glass excellent in impact resistance is more easily obtained. As the plasticized polyvinyl acetal resin layer, a plasticized polyvinyl acetal resin layer which has a sound insulation function can also be used. In this case, it is possible to use at least one layer in which in the initial state before lamination of layers, the content of the plasticizer is preferably 30% by mass or more, more preferably 30 to 50% by mass, still more preferably 31 to 40% by mass, and particularly preferably 32 to 35% by mass based on the total mass of the resin composition constituting the plasticized polyvinyl acetal resin layer.

As the plasticizer, the plasticizer described in the above paragraph <Plasticizer> above may be used.

The plasticized polyvinyl acetal resin layer may optionally contain the additive described in the above paragraph <Additive>.

The plasticized polyvinyl acetal resin layer may have a wedge-shaped thickness profile. Consequently, the laminate of the present invention can have the wedge-shaped thickness profile even when the thickness profile of the polyvinyl acetal resin film is a parallel plane, and the laminate can be used for a head-up display (HUD) in automobile windshields.

The plasticized polyvinyl acetal resin layer may be a commercially available plasticized polyvinyl butyral sheet with or without a color shade, and with or without the wedge-shaped thickness profile. Similarly, a plasticized polyvinyl acetal resin layer having infrared absorbing or reflecting nanoparticles dispersed in a plasticized polyvinyl acetal resin layer for infrared shielding, or a colored plasticized polyvinyl acetal resin layer may be used. Since the plasticized polyvinyl acetal resin layer may be naturally a sheet having a sound insulation function, improved sound insulation properties can be obtained by combination with the polyvinyl acetal resin film. The plasticized polyvinyl acetal resin layer can also naturally integrate several of the previously described functions in itself.

<Method of producing plasticized polyvinyl acetal resin layer>

The plasticized polyvinyl acetal resin layer may be produced by the method described in the above paragraph <Method of producing polyvinyl acetal resin film>.

In the laminate of the present invention, a difference between the hydroxyl group amount of the polyvinyl acetal resin in the resin composition constituting the polyvinyl acetal resin film and the hydroxyl group amount of the polyvinyl acetal resin in the resin composition constituting the plasticized polyvinyl acetal resin layer is preferably 4% by mass or less, more preferably 2% by mass or less, and particularly preferably 1% by mass or less as percentage by mass of vinyl alcohol units. In a case where the resin composition constituting the polyvinyl acetal resin film and/or the resin composition constituting the plasticized polyvinyl acetal resin layer contain a mixture of plural resins, a difference between the hydroxyl group amount of at least one polyvinyl acetal resin contained in the polyvinyl acetal resin film and the hydroxyl group amount of at least one polyvinyl acetal resin contained in the plasticized polyvinyl acetal resin layer is preferably equal to or less than the above upper limit value. When the difference is equal to or less than the above upper limit value, a difference in refractive index between the polyvinyl acetal resin film and the plasticized polyvinyl acetal resin layer is reduced in an equilibrium state after transfer of the plasticizer in the laminate. Therefore, when the plasticized polyvinyl acetal resin layer and the polyvinyl acetal resin film which have different dimensions are used, the boundary is less visible, and thus it is preferable.

On the other hand, as a preferred embodiment, the hydroxyl group amount of the polyvinyl acetal resin in the resin composition constituting the polyvinyl acetal resin film is set to be smaller than the hydroxyl group amount of the polyvinyl acetal resin in the resin composition constituting the plasticized polyvinyl acetal resin layer, so that an average plasticizer amount in the polyvinyl acetal resin film in the equilibrium state after transfer of the plasticizer in the laminate is set to 30% by mass or more. In this case, the hydroxyl group amount of the polyvinyl acetal resin in the resin composition constituting the polyvinyl acetal resin film is preferably lower by 5% by mass or more, more preferably lower by 8% by mass or more than the hydroxyl group amount of the polyvinyl acetal resin in the resin composition constituting the plasticized polyvinyl acetal resin layer. When the difference in the hydroxyl group amount is equal to or more than the above lower limit value, the amount of the plasticizer of the polyvinyl acetal resin film in the equilibrium state can be sufficiently increased, and a laminated glass imparted with the sound insulation function is more easily obtained, which is preferable.

Although the laminate in the present invention can have the following layer structure, the present invention is not limited thereto.

(1) four-layer structure consisting of transparent substrate A/polyvinyl acetal resin film/functional layer A/transparent substrate B,

(2) five-layer structure consisting of transparent substrate A/polyvinyl acetal resin film/functional layer A/functional layer B/transparent substrate B

(3) five-layer structure consisting of transparent substrate A/functional layer B/polyvinyl acetal resin film/functional layer A/transparent substrate B,

(4) five-layer structure consisting of transparent substrate A/polyvinyl acetal resin film/functional layer A/plasticized polyvinyl acetal resin layer/transparent substrate B,

(5) five-layer structure consisting of transparent substrate A/plasticized polyvinyl acetal resin layer/polyvinyl acetal resin film/functional layer A/transparent substrate B,

(6) six-layer structure consisting of transparent substrate A/plasticized polyvinyl acetal resin layer/polyvinyl acetal resin film/functional layer A/plasticized polyvinyl acetal resin layer/transparent substrate B,

(7) six-layer structure consisting of transparent substrate A/functional layer B/polyvinyl acetal resin film/functional layer A/plasticized polyvinyl acetal resin layer/transparent substrate B,

(8) six-layer structure consisting of transparent substrate A/polyvinyl acetal resin film/functional layer A/functional layer B/plasticized polyvinyl acetal resin layer/transparent substrate B,

(9) six-layer structure consisting of transparent substrate A/polyvinyl acetal resin film/functional layer A/plasticized polyvinyl acetal resin layer/functional layer B/transparent substrate B,

(10) six-layer structure consisting of transparent substrate A/functional layer B/plasticized polyvinyl acetal resin layer/polyvinyl acetal resin film/functional layer A/transparent substrate B,

(11) seven-layer structure consisting of transparent substrate A/plasticized polyvinyl acetal resin layer/polyvinyl acetal resin film/functional layer A/functional layer B/plasticized polyvinyl acetal resin layer/transparent substrate B,

(12) seven-layer structure consisting of transparent substrate A/functional layer B/plasticized polyvinyl acetal resin layer/polyvinyl acetal resin film/functional layer A/plasticized polyvinyl acetal resin layer/transparent substrate B,

(13) seven-layer structure consisting of transparent substrate A/plasticized polyvinyl acetal resin layer/functional layer B/polyvinyl acetal resin film/functional layer A/plasticized polyvinyl acetal resin layer/transparent substrate B.

In a case where heating a transparent substrate outside a vehicle is mainly required, for example in a case where melting snow deposited on the transparent substrate is required, it is preferable that the polyvinyl acetal resin film is in contact with the transparent substrate outside the vehicle and the conductive layer is present, that is, in the layer structure (4), for example, while the transparent substrate A is an outside transparent substrate, the transparent substrate B is an inside transparent substrate, and the functional layer A is a conductive layer.

In a case where heating a transparent substrate inside a vehicle is mainly required, for example in a case where removal of haze in the vehicle is required, it is preferable that the polyvinyl acetal resin film is in contact with the transparent substrate inside the vehicle and the conductive layer is present, that is, in the layer structure (4), for example, while the transparent substrate A is an inside transparent substrate, the transparent substrate B is an outside transparent substrate, and the functional layer A is a conductive layer.

<Method of producing laminate>

The laminate can be produced by methods known to those skilled in the art. For example, any number of the polyvinyl acetal resin film having a functional layer and, if laminated, any number of the plasticized polyvinyl acetal resin layer are laminated on the transparent substrate in any order, and another transparent substrate is laminated thereon. The temperature of the obtained material is raised as a pre-thermocompression step, and thereby, the polyvinyl acetal resin film and, if laminated, the plasticized polyvinyl acetal resin layer are entirely or locally bonded to the transparent substrates through thermal fusion. Then, the bonded product is treated with an autoclave, and then a laminate can be produced.

A laminate may be produced by previously bonding the polyvinyl acetal resin film having a functional layer and, if laminated, the plasticized polyvinyl acetal resin layer and/or another functional layer, arranging between two transparent substrates, and then bonding through thermal fusion at high temperature.

As the pre-thermocompression step, from the viewpoint of removing excess air or carrying out light bonding between adjacent layers, there are a method of degassing under reduced pressure by a method such as a vacuum bag, a vacuum ring, or a vacuum laminator, a method of degassing using a nip roll, and a method of compression molding under high temperature conditions.

For example, the vacuum bag method or vacuum ring method described in EP 1235683 B1 can be performed, for example, at about $2 \times 10^4$ Pa and 130 to 145°C.

The vacuum laminator comprises a heatable and vacuumable chamber, in which a laminate is formed for about 20 minutes to about 60 minutes. Usually, a reduced pressure of 1 Pa to $3 \times 10^4$ Pa and a temperature of 100°C to 200°C, particularly 130°C to 160°C, are effective. In a case where the vacuum laminator is used, depending on the temperature and pressure, treatment with an autoclave may not be performed.

The treatment with an autoclave is carried out, for example, at a pressure of about $1 \times 10^6$ Pa to about $1.5 \times 10^6$ Pa and a temperature of about 100°C to about 145°C for about 20 minutes to 2 hours.

In the case of the simplest layer structure, in order to produce a laminate, a polyvinyl acetal resin film and a functional layer are arranged or a polyvinyl acetal resin film to which the functional layer is provided in advance is arranged on a first transparent substrate and, if laminated, a plasticized polyvinyl acetal resin layer is simultaneously or subsequently arranged, and a second transparent substrate is arranged thereon to produce a composite material. Here, the order of the polyvinyl acetal resin film and the plasticized polyvinyl acetal resin layer may be reversed. Next, the composite material is subjected to the pre-thermocompression step. A degassing step may be optionally comprised.

Finally, the composite material is optionally subjected to an autoclave process.

After arranging the polyvinyl acetal resin film on the first transparent substrate and before arranging the second transparent substrate, a method of arranging the polyvinyl acetal resin layer and, if laminated, the plasticized polyvinyl acetal resin layer is not particularly limited, and various methods can be applied. For example, the polyvinyl acetal resin film and the plasticized polyvinyl acetal resin layer may be supplied from a roll having a proper width, and may be cut to a desired size to arrange, or the film previously cut to a desired size may be arranged. For example, in a case where the laminate is an automobile windshield, the plasticized polyvinyl acetal resin layer supplied from a roll may be heated/drawn, cut, and processed into a fan shape, and the resulting layer may be used.

In the fields of automobiles, in particular when windshields are produced, the windshields are sometimes produced such that the top of the glass has a so-called color shade region. Thus, the polyvinyl acetal resin film and/or, if laminated, the plasticized polyvinyl acetal resin layer may be coextruded together with a properly colored polymer melt, or at least one of the polyvinyl acetal resin film and the plasticized polyvinyl acetal resin layer may have a partially different coloration characteristic. In the present invention, such coloring may be carried out by completely or partially coloring at least one of the polyvinyl acetal resin film and the plasticized polyvinyl acetal resin layer.

Thus, in the present invention, the plasticized polyvinyl acetal resin layer if laminated may have a color gradation adapted to the shape of the windshield, in particular in process steps already preceded.

When a portion of a glass, for example, the top of a glass in a vehicle has the color shade region, or when a peripheral edge portion of the glass is provided with a dark paint, from the viewpoint of more easily obtaining better forward visibility, it is preferable that a linear conductive material constituting a conductive layer, a bus bar connected to the linear conductive material, and the like are present in the color shade region or in the dark paint region.

The laminate of the present invention is used as laminated glass in buildings or vehicles. Thus, the present invention also relates to a vehicle glass comprising the laminate. The vehicle glass means a windshield, a rear glass, a roof glass, a side glass or the like for a vehicle such as a train, a tram, a car, a ship and an aircraft.

When a laminated glass produced using the polyvinyl acetal resin film of the present invention and a conductive layer whose at least one side has been subjected to low reflectance treatment (e.g. blackening treatment) as a functional layer is irradiated with light on the surface treated to have low reflectance (e.g. blackened surface) side, the haze is usually 2.0 or less, preferably 1.8 or less, and more preferably 1.5 or less. When light is applied on a metallic luster surface of the laminated glass described above, the haze is usually 3.0 or less, preferably 2.8 or less, and more preferably 2.5 or less.

The haze can be measured, for example, according to JIS R 3106. The haze can be adjusted to equal to or less than the above upper limit value by using the polyvinyl acetal resin film of the present invention, bonding metal foil without an adhesive agent, and reducing the linear width of the linear conductive material.

When a laminated glass is produced using the polyvinyl acetal resin film of the present invention and a conductive layer whose at least one side has been subjected to low reflectance treatment as a functional layer, it is preferable that the linear conductive material of the conductive layer is not visible from the low reflectance treated surface side of the laminated glass. Due to the fact that the linear conductive material is not visible, especially in applications where good forward visibility of a vehicle windshield or the like is required, the laminated glass can be suitably used. The visibility of the conductive layer is evaluated sensually.

When a laminated glass is produced using a plasticized polyvinyl acetal resin layer, transparent substrates, and the polyvinyl acetal resin film of the present invention having a smaller dimension than them, it is preferable that an end of the polyvinyl acetal resin film is not visually identified. Due to the fact that the end of the polyvinyl acetal resin film is not visually identified, the laminated glass can be suitably used especially in applications where good forward visibility of a vehicle windshield or the like is required. The visibility of the end of the polyvinyl acetal resin film is evaluated sensually.

When transfer of the plasticizer from the plasticized polyvinyl acetal resin layer to the polyvinyl acetal resin film is not inhibited in a laminated glass, for example, when a laminated glass is produced by lamination such that the polyvinyl acetal resin film of the present invention and the plasticized polyvinyl acetal resin layer are entirely or partially adjacent to each other, usually, the plasticizer contained in the plasticized polyvinyl acetal resin layer transfers to the polyvinyl acetal resin film with the passage of time, and the amount of the plasticizer contained in the plasticized polyvinyl acetal resin layer is approximately the same as the amount of the plasticizer contained in the polyvinyl acetal resin film. In the present invention, such an average plasticizer amount is preferably 18 to 35% by mass, more preferably 20 to 30% by mass, and particularly preferably 25 to 29% by mass. When the average plasticizer amount is within the above range, desired characteristics of the laminated glass, for example, an impact reduction on a head of a person on board at the time of collision, are more easily obtained. The average plasticizer amount is calculated by the method mentioned in the examples described later. The average plasticizer amount can be adjusted within the above range by adjusting the amount of the plasticizer contained in the plasticized polyvinyl acetal resin layer, the thickness of the plasticized polyvinyl acetal resin layer, the amount of the plasticizer contained in the polyvinyl acetal resin film, and the thickness of the polyvinyl acetal resin film.

A difference between the visible light reflectance of the laminated glass comprising the conductive layer of the present invention and the visible light reflectance of the laminated glass corresponding to the laminated glass of the present invention except that the conductive layer is not comprised is preferably small. When the difference is small, especially in applications where good forward visibility of a vehicle windshield or the like is required, the laminated glass comprising the conductive layer in the present invention can be suitably used. The visible light reflectance of the laminated glass can be measured according to JIS R 3106. The difference can be reduced by configuring the laminated glass such that the surface treated to have low reflectance of the conductive layer is arranged on the side of a person on board or the observer side, or reducing the line width of the linear conductive material.

[Examples]

The present invention is hereunder described in more detail with reference to Examples, but it should be construed that the present invention is by no means restricted by these Examples.

[Reference Example 1]

A polyvinyl butyral resin 1 (hereinafter referred to as "resin 1") and a polyvinyl butyral resin 2 (hereinafter referred to as "resin 2") were blended at a mass ratio of 75 : 25, melt-kneaded to be extruded into strands, and pelletized. The obtained pellets were melt-extruded using a single screw extruder and a T-die, and a 50 pm-thick polyvinyl acetal resin film c with a smooth surface was obtained using a metal elastic roll.

<Evaluation of film forming property of polyvinyl acetal resin film>

The film forming property when the pellets were melt-extruded by a single screw extruder was evaluated based on the following criteria. The results are shown in Table 2.

A The film forming property was very good.
B Film formation was good.
C Coloring and generation of decomposition gas occurred, but film formation was possible.
D Film formation was impossible.

<Measurement of peak top molecular weight and molecular weight distribution of resin for constituting polyvinyl acetal resin film>

The resin for constituting the obtained polyvinyl acetal resin film was analyzed by GPC. For the GPC analysis, GPCmax TDA 305 from Viscotek Corporation and a RI detector were used as analyzers, and two connected GPC KF-806L from Shodex, a tip of which was further connected to KF-G from Shodex as a guard, were used as columns, a THF solvent and standard polystyrene (Easical GPC/SEC Calibration Standards PS-1 manufactured by Agilent Technologies, Inc.) were used, and OmniSE, C4.7 was used as analysis software. Measurement was carried out at 40°C and an injection amount of 100 pL to determine the peak top molecular weight and molecular weight distribution of the resin. The results are shown in Table 2.

<Measurement of heat creep resistance value (1) and heat creep resistance value (2)>

The heat creep resistance value (1) and the heat creep resistance value (2) of the polyvinyl acetal resin film were measured according to the methods described in the above paragraphs <Method (1) of measuring heat creep resistance value (1)> and <Method (2) of measuring heat creep resistance value (2)>, respectively. The results are shown in Table 2.

Physical property values of a resin A or C used as the resin 1 and a resin B used as the resin 2 in Reference Example 1 and Reference Examples 2 to 10 described later are shown in Table 1.

[Table 1]

| Resin | Hydroxyl group amount (mass%) | Acetalization degree (mass%) | Acetyl group amount (mass%) | Viscosity of 10 % by mass solution in toluene/ethanol =1/1 (mPa·s) |
|---|---|---|---|---|
| A | 19.8 (28.5 mol%) | 79.2 (70.8 mol%) | 1.0 (0.7 mol%) | 152 |
| B | 20.1 (28.9 mol%) | 79.0 (70.4 mol%) | 0.9 (0.7 mol%) | 1410 |
| c | 19.7 (28.4 mol%) | 79.2 (70.8 mol%) | 1.1 (0.8 mol%) | 65 |

[Reference Examples 2 to 4]

50 pm-thick polyvinyl acetal resin films d, e, and a with a smooth surface were produced in the same manner as in Reference Example 1 except that a mixing ratio between the resin 1 and the resin 2 was changed to the ratio described in Table 2.

Then, the film forming properties of the polyvinyl acetal resin film were evaluated in the same manner as in Reference Example 1, the peak top molecular weight and the molecular weight distribution of the resin for constituting the polyvinyl acetal resin film were determined, and the heat creep resistance value (1) and the heat creep resistance value (2) were measured. The results are shown in Table 2.

[Table 2]

| | Polyvinyl acetal resin film | Resin 1 | Resin 2 | Resin 1: Resin 2 (mass ratio) | Viscosity of 10 % by mass solution of resin in toluene/ethanol=1/1 (mPa·s) | | | Thickness of the film (μm) | Film forming properties | GPC analysis of resin for constituting the resin film | | Heat creep resistance value (1) (mm) | Heat creep resistance value (2) (mm) |
| | | | | | Resin 1 | Resin 2 | Resin 1 + Resin 2 | | | Peak top molecular weight | Molecular weight distribution Mw/Mn | | |
|---|---|---|---|---|---|---|---|---|---|---|---|---|---|
| Reference Example 1 | c | A | B | 75:25 | 152 | 1410 | 245 | 50 | I A | 129,000 | 2.9 | 3.8 | 3.6 |
| Reference Example 2 | d | A | B | 50:50 | 152 | 1410 | 444 | 50 | B | 147,000 | 3.2 | 0.8 | 0.9 |
| Reference Example 3 | e | A | B | 25:75 | 152 | 1410 | 783 | 50 | C | 162,200 | 3.1 | 0.9 | 0.6 |
| Reference Example 4 | a | A | - | 100:0 | 152 | - | - | 50 | A | 111,700 1 | 2.5 | >30 | >30 |

As shown in Table 2, when the polyvinyl acetal resin film was produced using a resin in which the viscosity of the 10% by mass solution of the resin in toluene/ethanol=1/1 (by mass ratio) was more than 200 mPa ·s (Reference Examples 1 to 3), excellent heat creep resistance value (1) and heat creep resistance value (2) were obtained. This indicates that when the laminated glass is produced using such a polyvinyl acetal resin film of the present invention, deformation and destruction of the functional layer or the conductive layer are well suppressed, and misalignment of obtained laminated glass under high temperature conditions is well suppressed.

On the other hand, when a polyvinyl acetal resin film was produced using a resin in which the viscosity of the 10% by mass solution of the resin in toluene/ethanol=1/1 (by mass ratio) was 200 mPa ·s or less (Reference Example 4), only the heat creep resistance value (1) and the heat creep resistance value (2) more than 30 mm were obtained. When the laminated glass was produced using such a polyvinyl acetal resin film, there was a high possibility that deformation and destruction of the functional layer or the conductive layer are not sufficiently suppressed, and that misalignment of obtained laminated glass under high temperature conditions is not sufficiently suppressed, and thus the polyvinyl acetal resin film was inferior to those of Reference Examples 1 to 3.

[Reference Example 5]

A UV-curable nano-silver ink was printed on the polyvinyl acetal resin film c by a letterpress printing method to a thickness of 10 pm, and a linear conductive material pattern having 20 lines with a line width of 300 pm, a pitch of 100 pm, and a length of 5 cm was formed. The pattern was irradiated with UV light to cure the ink.

Next, the polyvinyl acetal resin film provided with the pattern was arranged on a glass of 10 cm long, 10 cm wide, and 3 mm thick so that a printed surface faced upward, and a copper foil tape (5 mm wide and 15 cm long) having a conductive adhesive layer as a bus bar was applied so as to overlap with both ends of each linear conductive material at a right angle to the direction of the linear conductive material of the pattern. Each bus bar was installed so as to protrude from the polyvinyl acetal resin film as an electrode. Subsequently, as a plasticized polyvinyl acetal resin layer, an interlayer film for automobile windshields of 10 cm long, 10 cm wide, and 0.76 mm thick [containing polyvinyl butyral resin (72% by mass) having a hydroxyl group amount of 20.0% by mass and a viscosity average polymerization degree of 1700 and 3GO (28% by mass)] was layered thereon, and a glass of 10 cm long, 10 cm wide, and 3 mm thick was further layered and fixed with a tape. At this time, the linear conductive material pattern was arranged at the center of the glass, and each electrode end was arranged so as to protrude from a glass end.

Subsequently, the obtained laminated material was placed in a vacuum bag, treated at 100°C under reduced pressure for 30 minutes. After cooling, the reduced pressure was released, and a laminated glass after prelamination was taken out. For four sheets of the laminated glass in total after prelamination which were obtained in the same manner, a state of a portion in contact with an end of the bus bar was observed, and the presence or absence of cracking or deformation was confirmed.

Thereafter, the laminated glass after prelamination was put into an autoclave and treated at 140°C and 1.2 MPa for 30 minutes. The obtained laminated glass after autoclaving was observed in the same manner as described above.

The presence or absence of cracking or deformation after prelamination and after autoclaving was evaluated based on the following criteria. The results are shown in Table 3.

A: The presence or absence of cracking or deformation of a linear conductive material was not observed.
B: Some deformation was observed, but no cracking in the linear conductive material was observed, which was practicable.
C: Cracking and deformation were observed in some linear conductive materials.
D: Cracking and deformation were observed in many linear conductive materials, which was not practical.

[Reference Examples 6 to 10]

A laminated glass was produced and evaluated in the same manner as in Reference Example 5 except that the polyvinyl acetal resin film shown in Table 3 was used. A film m used in Reference Example 10 was produced as described in Table 5 by the method described later.

[Table 3]

| | Polyvinyl acetal resin film | Resin 1 | Resin 2 | Resin 1: Resin 2 (mass ratio) | Viscosity of 10 % by mass solution of resin in toluene/ ethanol=1/1 (mPa-s) | | | Thickness of the film (μm) | Plasticizer (mass%) | Coating thickness of UV-curable nano-silver ink (μm) | Line width (μm) | Pitch (μm) | State of conductive layer | |
|---|---|---|---|---|---|---|---|---|---|---|---|---|---|---|
| | | | | | Resin 1 | Resin 2 | Resin 1 + Resin 2 | | | | | | After prelamination | After autoclaving |
| Reference Example 5 | c | A | B | 75:25 | 152 | 1410 | 245 | 50 | 0 | 10 | 300 | 100 | A | B |
| Reference Example 6 | d | A | B | 50:50 | 152 | 1410 | 444 | 50 | 0 | 10 | 300 | 100 | A | A |
| Reference Example 7 | e | A | B | 25:75 | 152 | 1410 | 783 | 50 | 0 | 10 | 300 | 100 | A | A |
| Reference Example 8 | b | C | - | 100:0 | 65 | - | - | 50 | 0 | 10 | 300 | 100 | C | D |
| Reference Example 9 | a | A | - | 100:0 | 152 | - | - | 50 | 0 | 10 | 300 | 100 | B | C |
| Reference Example 10 | m | A | B | 75:25 | 152 | 1410 | 245 | 50 | 22 | 10 | 300 | 100 | B | C |

EP 3 604 254 B1

As shown in Table 3, in a case where a resin in which the viscosity of the 10% by mass solution of the resin in toluene/ethanol=1/1 (by mass ratio) was more than 200 mPa ·s was used, the amount of the plasticizer in the polyvinyl acetal resin film was 0 to 20% by mass based on the total mass of the resin composition constituting the polyvinyl acetal resin film, and the polyvinyl acetal resin film was produced (Reference Examples 5 to 7), no cracking was observed in the linear conductive material of the conductive layer (electrically conductive structure) after prelamination and after autoclaving, which was practicable.

On the other hand, in a case where the polyvinyl acetal resin film was produced by use of a resin in which the viscosity of the 10% by mass solution of the resin in toluene/ethanol=1l1 (by mass ratio) was 200 mPa ·s or less (Reference Examples 8 to 9), and in a case where the amount of the plasticizer in the polyvinyl acetal resin film was 22% by mass based on the total mass of the resin composition constituting the polyvinyl acetal resin film (Reference Example 10), deformation, or deformation and cracking were observed in the linear conductive material of the conductive layer after prelamination, and deformation and cracking were observed in the linear conductive material of the conductive layer after autoclaving, and thus it was inferior to those of Reference Examples 5 to 7.

<Production of polyvinyl acetal resin films a to m and o to u >

A polyvinyl butyral resin 1 (hereinafter referred to as "resin 1") was melt-kneaded, or the resin 1 and a polyvinyl butyral resin 2 (hereinafter referred to as "resin 2") were melt-kneaded at a mass ratio described in Table 5 or 8. When the polyvinyl acetal resin film contained a plasticizer (polyvinyl acetal resin films j, m and r), a predetermined amount of 3GO as a plasticizer was melt-kneaded together with the resin 1 and the resin 2. Next, the obtained melt-kneaded product was extruded into strands and pelletized. The obtained pellet was melt-extruded using a single screw extruder and a T-die, and a polyvinyl acetal resin film with a smooth surface was obtained using a metal elastic roll. The thicknesses of the obtained polyvinyl acetal resin films a to m and o to u are shown in Table 5 or Table 8.

Physical property values of the resin 1 and the resin 2 used in the production of the polyvinyl acetal resin films a to m and the production of the polyvinyl acetal resin films o to u are shown in Table 4.

[Table 4]

| Polyvinyl acetal resin film | Resin | Hydroxyl group amount (mass%) | Acetalization degree (mass%) | Acetyl group amount (mass%) | Viscosity of 10 % by mass solution in toluene/ethanol=1/1 (mPa·s) |
|---|---|---|---|---|---|
| a, c to j, m and o to u | 1 | 19.8 (28.5 mol%) | 79.2 (70.8 mol%) | 1.0 (0.7 mol%) | 152 |
| b | 1 | 19.7 (28.4 mol%) | 79.2 (70.8 mol%) | 1.1 (0.8 mol%) | 65 |
| k | 1 | 18.2 (26.5 mol%) | 80.6 (72.6 mol%) | 1.2 (0.9 mol%) | 140 |
| l | 1 | 25.8 (36.0 mol%) | 73.1 (63.2 mol%) | 1.1 (0.8 mol%) | 210 |
| c to j, m and o to u | 2 | 20.1 (28.9 mol%) | 79.0 (70.4 mol%) | 0.9 (0.7 mol%) | 1410 |

[Reference Example 11]

<Production of polyvinyl acetal resin film with copper foil bonded>

A 7 μm thick copper foil whose one surface was blackened was layered on the produced polyvinyl acetal resin film c in such an orientation that the surface subjected to blackening (hereinafter may be referred to as the blackened surface) and the polyvinyl acetal resin film c were in contact with each other. Here, the visible light reflectance of the blackened surface measured according to JIS R 3106 was 5.2%. Next, the upper and lower sides of the layered product in which the polyvinyl acetal resin film c and the copper foil were layered were sandwiched between 50 μm thick PET films, and the layered product was passed between thermocompression bonding rolls set at 120°C (pressure: 0.2 MPa, speed: 0.5 m/min). Then, the PET films were peeled off to obtain a polyvinyl acetal resin film to which the copper foil was bonded.

<Production of polyvinyl acetal resin film having conductive layer>

After a dry film resist was laminated on the copper foil of the produced polyvinyl acetal resin film to which the copper foil was bonded, an etching resistance pattern was formed using a photolithography method. Next, the polyvinyl acetal resin film to which the copper foil was bonded and on which the etching resistance pattern was formed was immersed in a copper etching solution to form a conductive layer (electrically conductive structure), and then a remaining photoresist layer was removed by a conventional method. Thus, a polyvinyl acetal resin film having the conductive layer was obtained. This polyvinyl acetal resin film does not have an adhesive layer between the polyvinyl acetal resin film and the conductive layer. The conductive layer had a copper mesh structure in which copper wires having a line width of 10 μm were arranged in a grid at intervals of 500 μm in a square of 5 cm × 5 cm, and had a structure in which the upper and lower sides were connected to a copper wire structure with a width of 5 mm corresponding to a bus bar.

[Reference Examples 12 to 15]

A polyvinyl acetal resin film having a conductive layer was obtained in the same manner as in Reference Example 11 except that the polyvinyl acetal resin films d, e, a and b described in Table 5 were used instead of the polyvinyl acetal resin film c.

[Example 1]

A polyvinyl acetal resin film having a conductive layer was obtained in the same manner as in Reference Example 11 except that the polyvinyl acetal resin film f described in Table 5 was used instead of the polyvinyl acetal resin film c. Specifically, the polyvinyl acetal resin film f was produced using the resin described in Table 5. Regarding the side of the polyvinyl acetal resin film f which was not a surface in contact with a metal elastic roll, that is, a surface in contact with a mirror surface metal cooling roll, the mean spacing Sm value of unevenness and the value of ten-point average roughness Rz were measured according to JIS B0601-1994 using Surftest SJ-310 (measurement force: 0.75 mN, stylus shape: tip radius 2 μm R/tip angle 60°) from Mitutoyo Corporation. The results are shown in Table 8.

[Examples 2 to 5]

A polyvinyl acetal resin film having a conductive layer was obtained and the surface roughness was evaluated in the same manner as in Example 1 except that each of the polyvinyl acetal resin films g to j described in Table 5 was used instead of the polyvinyl acetal resin film f. The results are shown in Table 8.

[Reference Example 16]

A polyvinyl acetal resin film having a conductive layer was obtained in the same manner as in Reference Example 11 except that a 7 μm thick copper foil whose one side was blackened was layered in such an orientation that a metallic luster surface and the polyvinyl acetal resin film c were in contact with each other. Here, the visible light reflectance of the metallic luster surface measured according to JIS R 3106 was 63%.

[Reference Example 17]

A polyvinyl acetal resin film having a conductive layer was obtained in the same manner as in Reference Example 11 except that a line width of a photomask used for photolithography was changed. The conductive layer had a copper mesh structure in which copper wires having a line width of 5 μm were arranged in a grid at intervals of 500 μm in a square of 5 cm × 5 cm, and had a structure in which the upper and lower sides were connected to a copper wire structure with a width of 5 mm corresponding to a bus bar.

[Reference Example 18]

A polyvinyl acetal resin film having a conductive layer was obtained in the same manner as in Reference Example 17 except that a line width of a copper wire was adjusted to 20 μm. The conductive layer had a copper mesh structure in which copper wires having a line width of 20 μm were arranged in a grid at intervals of 1000 μm in a square of 5 cm × 5 cm, and had a structure in which the upper and lower sides were connected to a copper wire structure with a width of 5 mm corresponding to a bus bar.

[Reference Example 19]

A polyvinyl acetal resin film having a conductive layer was obtained in the same manner as in Reference Example 17 except that a line width of a copper wire was adjusted to 30 μm. The conductive layer had a copper mesh structure in which copper wires having a line width of 30 $\mu$m were arranged in a grid at intervals of 1500 $\mu$m in a square of 5 cm × 5 cm, and had a structure in which the upper and lower sides were connected to a copper wire structure with a width of 5 mm corresponding to a bus bar.

[Reference Example 20]

A polyvinyl acetal resin film having a conductive layer was obtained in the same manner as in Reference Example 17 except that a line width of a copper wire was adjusted to 40 $\mu$m. The conductive layer had a copper mesh structure in which copper wires having a line width of 40 $\mu$m were arranged in a grid at intervals of 2000 $\mu$m in a square of 5 cm × 5 cm, and had a structure in which the upper and lower sides were connected to a copper wire structure with a width of 5 mm corresponding to a bus bar.

[Reference Example 21]

A polyvinyl acetal resin film having a conductive layer was obtained in the same manner as in Reference Example 11except that a structure of a photomask used for photolithography was changed. The conductive layer had a structure in which copper wires having a line width of 10 $\mu$m were linearly arranged at intervals of 500 pm, and had a structure in which both ends of each straight line were connected to a copper wire structure with a width of 5 mm corresponding to a bus bar.

[Reference Example 22]

A polyvinyl acetal resin film having a conductive layer was obtained in the same manner as in Reference Example 11 except that a structure of a photomask used for photolithography was changed. The conductive layer had a structure in which copper wires having a line width of 10 $\mu$m were arranged in a wavy line form at intervals of 500 pm, and had a structure in which both ends of each wavy line were connected to a copper wire structure with a width of 5 mm corresponding to a bus bar.

[Reference Example 23]

A polyvinyl acetal resin film having a conductive layer was obtained in the same manner as in Reference Example 11except that a structure of a photomask used for photolithography was changed. The conductive layer had a structure in which copper wires having a line width of 10 $\mu$m were arranged in a zigzag line form at intervals of 500 $\mu$m, and had a structure in which both ends of each zigzag line were connected to a copper wire structure with a width of 5 mm corresponding to a bus bar.

[Reference Example 24]

A polyvinyl acetal resin film having a conductive layer was obtained in the same manner as in Reference Example 11 except that a polyvinyl acetal resin film k was used instead of the polyvinyl acetal resin film c.

[Reference Example 25]

A polyvinyl acetal resin film having a conductive layer was obtained in the same manner as in Reference Example 11 except that a polyvinyl acetal resin film 1 was used instead of the polyvinyl acetal resin film c.

[Reference Example 26]

A polyvinyl acetal resin film having a conductive layer was obtained in the same manner as in Reference Example 11 except that when a copper foil was bonded to the polyvinyl acetal resin film c, adhesion was performed using an acrylate adhesive instead of bonding using a thermocompression bonding roll.

[Reference Examples 27 to 28]

A polyvinyl acetal resin film having a conductive layer was obtained in the same manner as in Reference Example 26 except that the polyvinyl acetal resin film a or e was used instead of the polyvinyl acetal resin film c.

[Reference Example 29]

A polyvinyl acetal resin film having a conductive layer was obtained in the same manner as in Reference Example 11 except that a polyvinyl acetal resin film m was used instead of the polyvinyl acetal resin film c.

[Comparative Reference Example 30]

A PET film having a conductive layer was obtained in the same manner as in Reference Example 26 except that a PET film (50 $\mu$m in thickness) was used instead of the polyvinyl acetal resin film c.

<Production of laminated glass>

The polyvinyl acetal resin films having a conductive layer obtained in Reference Examples 11 to 29, Examples 1 to 5 and Examples 6 to 9 and Comparative Examples 1 to 4 described later, and the PET film having a conductive layer obtained in Comparative Reference Example 30 were each cut into 5 cm long and 5 cm wide, and arranged on a glass of 10 cm long, 10 cm wide and 3 mm thick. At this time, the film was arranged in an orientation in which a surface of the film having no conductive layer was in contact with the glass and in a location in which the conductive layer was located near the center of the glass. Next, an electrode (a copper foil tape with a conductive adhesive) was applied to each bus bar (5 mm wide copper wire) at both ends of the conductive layer such that each electrode end protruded out of the glass. In addition, an interlayer film for automobile windshields of 10 cm long, 10 cm wide, and 0.76 mm thick [containing polyvinyl butyral resin (72% by mass) having a hydroxyl group amount of 20.0% by mass and a viscosity average polymerization degree of 1700 and 3GO (28% by mass)] as a plasticized polyvinyl acetal resin layer, and a glass of 10 cm long, 10 cm wide, and 3 mm thick were layered thereon.

Subsequently, this layered product was placed in a vacuum bag and decompressed at room temperature for 15 minutes using a vacuum pump. Then, the temperature was raised to 100°C while decompressing, and heating was continued as it is for 60 minutes. After the temperature was lowered, the pressure was returned to normal pressure, and a laminated glass after prelamination was taken out.

Thereafter, the laminated glass was put into an autoclave and treated at 140°C and 1.2 MPa for 30 minutes to produce a laminated glass.

<Evaluation of state of conductive layer>

The state of the conductive layer after prelamination and after autoclaving was visually observed using a loupe, and the presence or absence of deformation and disconnection of the linear conductive material was evaluated based on the following criteria. The results are shown in Table 5, Table 7 and Table 8.

A Deformation and disconnection were not observed.
B Partial deformation was observed but no disconnection was observed.
C Slight disconnection was observed.
D Disconnection was remarkable.

<Evaluation of conductivity>

Resistance between two electrodes applied on each bus bar was measured by a tester. The resistance value was measured before and after production of a laminated glass, and the conductivity was evaluated based on the following criteria. The results are shown in Table 5, Table 7 and Table 8.

A The resistance value after production of a laminated glass was extremely good, such as within 1.5 times the resistance value before production of a laminated glass.
B The resistance value after production of a laminated glass was good, such as more than 1.5 times and within 2 times the resistance value before production of a laminated glass.
C Although the resistance value after production of a laminated glass was more than 2 times and within 4 times the resistance value before production of a laminated glass, it was practical.
D The resistance value after production of a laminated glass was more than 4 times the resistance value before production of a laminated glass, and it was not practical.

<Measurement of haze>

The polyvinyl acetal resin films having a conductive layer obtained in Reference Examples 11 to 20 and 24 to 29 and Examples 1 to 5, and the PET film having a conductive layer obtained in Comparative Reference Example 30 were each cut into 5 cm long and 5 cm wide, and arranged on a glass of 5 cm long, 5 cm wide and 3 mm thick. At this time, the film was arranged in an orientation in which a surface of the film having no conductive layer was in contact with the glass. An interlayer film for automobile windshields of 5 cm long, 5 cm wide, and 0.76 mm thick [containing polyvinyl butyral resin (72% by mass) having a hydroxyl group amount of 20.0% by mass and a viscosity average polymerization degree of 1700 and 3GO (28% by mass)] as a plasticized polyvinyl acetal resin layer, and a glass of 5 cm long, 5 cm wide, and 3 mm thick were layered thereon.

Subsequently, this layered product was placed in a vacuum bag and decompressed at room temperature for 15 minutes using a vacuum pump. Then, the temperature was raised to 100°C while decompressing, and heating was continued as it is for 60 minutes. After the temperature was lowered, the pressure was returned to normal pressure, and a laminated glass after prelamination was taken out.

Thereafter, the laminated glass was put into an autoclave and treated at 140°C and 1.2 MPa for 30 minutes to produce a laminated glass.

For each of the obtained laminated glass having a conductive layer, the haze at the time of light irradiation on the blackened surface side and the haze at the time of light irradiation on the metallic luster surface side were measured according to JIS R3106 using a haze meter. The results are shown in Table 5.

<Sensory evaluation of visibility of conductive layer>

A laminated glass in which the blackened surface side faced an observer was arranged at a position at a distance of about 50 cm from the observer. Whether a copper wire of a conductive layer was visible when the observer looked at 5 m ahead through the glass was sensually evaluated based on the following criteria. The results are shown in Table 5.

A The copper wire was hardly visible, and it was extremely good.
B The copper wire was slightly visible when the focus was shifted, but it was good.
C Although the copper wire was slightly visible, it was practical.
D The copper wire was visible, and it was not practical.

<Sensory evaluation of the visibility of end of polyvinyl acetal resin film>

After the laminated glass produced according to <Production of laminated glass> was left for 2 weeks at room temperature, whether an end of the polyvinyl acetal resin film having a smaller size than the interlayer film for automobile windshields was visually recognizable was sensually evaluated based on the following criteria. The results are shown in Table 5.

A The end was not recognizable at all, and it was extremely good.
B Although there was a portion in which the end was recognizable as a result of careful observation, it was good.
C Although the end was recognizable as a result of careful observation, it was practical.
D The end was clearly recognizable, and it was not practical.

<Average plasticizer amount>

The amount of the plasticizer (calculated value) at the time where the plasticizer contained in the interlayer film for automobile windshields as a plasticized polyvinyl acetal resin layer transferred to the polyvinyl acetal resin film and the amount of the plasticizer contained in the interlayer film for automobile windshields was compatible to the amount of the plasticizer contained in the polyvinyl acetal resin film was calculated according to the following formula. The results are shown in Table 5.

[Equation 1]

$$\text{Average plasticizer amount (mass\%)} = (A \times a + B \times b)/(a + b)$$

A (mass%): plasticizer amount of plasticized polyvinyl acetal resin layer

a (mm): thickness of plasticized polyvinyl acetal resin layer
B (mass%): plasticizer amount of polyvinyl acetal resin film
b (mm): thickness of polyvinyl acetal resin film

[Table 5]

| No. | Category | Film / PET | OH Resin 1 (mass%) | OH Resin 2 (mass%) | OH Resin 1+2 (mass%) | Resin 1:Resin 2 (mass ratio) | Visc. Resin 1 (mPa·s) | Visc. Resin 2 (mPa·s) | Visc. Resin 1+Resin 2 (mPa·s) | Thickness of film (μm) | Plasticizer (mass%) | Adhesive | Copper foil thickness (μm) | Bonding surface between film and copper foil | Film forming properties | Bonding temperature (°C) | Shape | Line width | Pitch (μm) | State after prelamination | State after autoclaving | Conductivity | Haze – blackened surface side | Haze – metallic luster surface side | Visibility of conductive layer | Visibility of film end | Average plasticizer amount (mass%) |
|---|---|---|---|---|---|---|---|---|---|---|---|---|---|---|---|---|---|---|---|---|---|---|---|---|---|---|---|
| 14 | Reference example | a | 19.8 | - | - | 100:0 | 152 | - | - | 50 | 0 | Without | 7 | Blackened surface | A | 120 | Grid | 10 | 500 | A | B | B | 1.1 | 2.0 | A | A | 26.3 |
| 15 | Reference example | b | 19.7 | - | - | 100:0 | 65 | - | - | 50 | 0 | Without | 7 | Blackened surface | B | 120 | Grid | 10 | 500 | A | C | C | 1.2 | 2.1 | A | A | 26.3 |
| 11 | Reference example | c | 19.8 | 20.1 | 19.9 | 75:25 | 152 | 1410 | 245 | 50 | 0 | Without | 7 | Blackened surface | A | 120 | Grid | 10 | 500 | A | A | A | 1.2 | 2.1 | A | A | 26.3 |
| 12 | Reference example | d | 19.8 | 20.1 | 20.0 | 50:50 | 152 | 1410 | 444 | 50 | 0 | Without | 7 | Blackened surface | B | 120 | Grid | 10 | 500 | A | A | A | 1.3 | 2.3 | A | A | 26.3 |
| 13 | Reference example | e | 19.8 | 20.1 | 20.1 | 25:75 | 152 | 1410 | 783 | 50 | 0 | Without | 7 | Blackened surface | C | 120 | Grid | 10 | 500 | A | A | A | 1.4 | 2.4 | A | A | 26.3 |
| 1 | Example | f | 19.8 | 20.1 | 19.9 | 75:25 | 152 | 1410 | 245 | 25 | 0 | Without | 7 | Blackened surface | - | 120 | Grid | 10 | 500 | B | B | B | 1.0 | 1.8 | A | A | 27.1 |
| 2 | Example | g | 19.8 | 20.1 | 19.9 | 75:25 | 152 | 1410 | 245 | 125 | 0 | Without | 7 | Blackened surface | - | 120 | Grid | 10 | 500 | A | A | A | 1.1 | 2.0 | A | A | 24.0 |
| 3 | Example | h | 19.8 | 20.1 | 19.9 | 75:25 | 152 | 1410 | 245 | 250 | 0 | Without | 7 | Blackened surface | - | 120 | Grid | 10 | 500 | A | A | A | 1.1 | 1.9 | A | A | 21.1 |
| 4 | Example | i | 19.8 | 20.1 | 19.9 | 75:25 | 152 | 1410 | 245 | 300 | 0 | Without | 7 | Blackened surface | - | 120 | Grid | 10 | 500 | A | A | A | 1.2 | 2.2 | A | A | 20.1 |
| 5 | Example | j | 19.8 | 20.1 | 19.9 | 75:25 | 152 | 1410 | 245 | 50 | 18 | Without | 7 | Metallic luster surface | - | 120 | Grid | 10 | 500 | B | A | A | 1.0 | 1.9 | A | A | 27.4 |
| 16 | Example | c | 19.8 | 20.1 | 19.9 | 75:25 | 152 | 1410 | 245 | 50 | 0 | Without | 7 | Blackened surface | - | 120 | Grid | 5 | 500 | A | B | B | 1.3 | 2.3 | A | A | 26.3 |
| 17 | Example | c | 19.8 | 20.1 | 19.9 | 75:25 | 152 | 1410 | 245 | 50 | 0 | Without | 7 | Blackened surface | - | 120 | Grid | 20 | 1000 | A | A | A | 1.1 | 1.9 | B | A | 26.3 |
| 18 | Example | c | 19.8 | 20.1 | 19.9 | 75:25 | 152 | 1410 | 245 | 50 | 0 | Without | 7 | Blackened surface | - | 120 | Grid | 30 | 1500 | A | A | A | 1.3 | 2.1 | C | A | 26.3 |
| 19 | Example | c | 19.8 | 20.1 | 19.9 | 75:25 | 152 | 1410 | 245 | 50 | 0 | Without | 7 | Blackened surface | - | 120 | Grid | 40 | 2000 | A | A | A | 1.5 | 2.3 | D | A | 26.3 |
| 20 | Example | c | 19.8 | 20.1 | 19.9 | 75:25 | 152 | 1410 | 245 | 50 | 0 | Without | 7 | Blackened surface | - | 120 | Straight line | 10 | 500 | A | A | A | 1.9 | 2.8 | A | A | 26.3 |
| 21 | Example | c | 19.8 | 20.1 | 19.9 | 75:25 | 152 | 1410 | 245 | 50 | 0 | Without | 7 | Blackened surface | - | 120 | Wavy line | 10 | 500 | A | A | A | - | - | A | A | 26.3 |
| 22 | Reference Example or Comparative Reference Example | c | 19.8 | 20.1 | 19.9 | 75:25 | 152 | 1410 | 245 | 50 | 0 | Without | 7 | Blackened surface | - | 120 | Zigzag | 10 | 500 | A | A | A | - | - | A | A | 26.3 |
| 23 | Reference Example or Comparative Reference Example | c | 19.8 | 20.1 | 19.9 | 75:25 | 152 | 1410 | 245 | 50 | 0 | Without | 7 | Blackened surface | - | 120 | Grid | 10 | 500 | A | B | B | 1.5 | 2.5 | A | A | 26.3 |
| 24 | Reference Example or Comparative Reference Example | k | 18.2 | - | - | 100:0 | 140 | - | - | 50 | 0 | Without | 7 | Blackened surface | - | 120 | Grid | 10 | 500 | A | A | A | 1.5 | 2.4 | A | B | 26.3 |
| 25 | Reference Example or Comparative Reference Example | l | 25.8 | - | - | 100:0 | 210 | - | - | 50 | 0 | Without | 7 | Blackened surface | - | 120 | Grid | 10 | 500 | A | A | A | 2.3 | 3.2 | A | C | 26.3 |
| 26 | Reference Example or Comparative Reference Example | c | 19.8 | 20.1 | 19.9 | 75:25 | 152 | 1410 | 245 | 50 | 0 | With | 7 | Blackened surface | - | 120 | Grid | 10 | 500 | A | B | B | 2.1 | 3.0 | A | A | 26.3 |
| 27 | Reference Example or Comparative Reference Example | a | 19.8 | - | - | 100:0 | 152 | - | - | 50 | 0 | With | 7 | Blackened surface | - | 120 | Grid | 10 | 500 | A | B | B | 2.3 | 3.3 | A | A | 26.3 |
| 28 | Reference Example or Comparative Reference Example | e | 19.8 | 20.1 | 20.1 | 25:75 | 152 | 1410 | 783 | 50 | 0 | With | 7 | Blackened surface | - | 120 | Grid | 10 | 500 | D | D | D | 1.3 | 2.2 | A | A | 26.3 |
| 29 | Reference Example or Comparative Reference Example | m | 19.8 | 20.1 | 19.9 | 75:25 | 152 | 1410 | 245 | 50 | 22 | Without | 7 | Blackened surface | - | 120 | Grid | 10 | 500 | A | A | A | 2.5 | 3.5 | A | A | 27.6 |
| 30 | Reference Example or Comparative Reference Example | n (PET) | PET | - | - | - | - | - | - | 50 | - | With | 7 | Blackened surface | - | 120 | Grid | 10 | 500 | A | A | A | - | - | A | D | - |

As shown in Table 5, when the amount of the plasticizer in the polyvinyl acetal resin film was within the range specified in the present invention, deformation and disconnection of the conductive layer were less likely to occur when the laminated glass was produced, and the conductivity was good. When no adhesive layer was provided between the polyvinyl acetal resin film and the conductive layer, the haze at the time of light irradiation on the blackened surface side of the laminated glass produced using the polyvinyl acetal resin film and the haze at the time of light irradiation on the metallic luster surface side of the laminated glass each showed a good value.

[Reference Examples 31 to 34]

In Reference Examples 31, 32 and 34, the polyvinyl acetal resin film produced in Reference Example 11 was used to produce a laminated glass for visible light reflectance measurement described later with the configuration of the laminated glass shown in Table 6. In Reference Example 33, the polyvinyl acetal resin film produced in Reference Example 16 was used to produce a laminated glass for visible light reflectance measurement described later with the configuration of the laminated glass shown in Table 6. Specifically, in the configuration of the laminated glass shown in Table 6, a glass of 5 cm long, 5 cm wide, and 3 mm thick, a polyvinyl acetal resin film cut into 5 cm long and 5 cm wide, and an interlayer film for automobile windshields of 5 cm long, 5 cm wide, and 0.76 mm thick [containing polyvinyl butyral resin (72% by mass) having a hydroxyl group amount of 20.0% by mass and a viscosity average polymerization degree of 1700 and 3GO (28% by mass)] as a plasticized polyvinyl acetal resin layer were layered. The resulting layered product was placed in a vacuum bag and decompressed at room temperature for 15 minutes using a vacuum pump. Then, the temperature was raised to 100°C while decompressing, and heating was continued as it is for 60 minutes. After the temperature was lowered, the pressure was returned to normal pressure, and a laminated glass after prelamination was taken out. Thereafter, the laminated glass was put into an autoclave and treated at 140°C and 1.2 MPa for 30 minutes to produce a laminated glass. At light irradiation on an inside glass (assuming the side of a person on board) of the obtained laminated glass for visible light reflectance measurement, the visible light reflectance was measured according to JIS R 3106. The results are shown in Table 6.

[Table 6]

| | | Polyvinyl acetal resin film | Configuration of laminated glass | Visible light reflectance (%) |
|---|---|---|---|---|
| Reference example | 31 | c | (Inside) glass/[resin film/(blackened surface) conduction (metallic luster surface)]/interlayer film/glass (outside) | 8.7 |
| | 32 | c | (Inside) glass/interlayer film/[resin film/(blackened surface) conduction (metallic luster surface)]/glass (outside) | 8.8 |
| | 33 | c | (Inside) glass/interlayer film/[(blackened surface) conduction (metallic luster surface)/resin film]/glass (outside) | 8.8 |
| | 34 | c | (Inside) glass/interlayer film/[(metallic luster surface) conduction (blackened surface)/resin film]/glass (outside) | 9.2 |

The "resin film" indicates a polyvinyl acetal resin film.
The "conduction" indicates a conductive layer.
The "interlayer film" indicates an interlayer film for automobile windshields.

[Reference Examples 35 to 38]

<Evaluation of influence of temperature at the time of bonding polyvinyl acetal resin film and copper foil on peeling strength, state of conductive layer, and conductivity>

A polyvinyl acetal resin film to which a copper foil was bonded was obtained in the same manner as in Reference Example 11 except that an A4 size polyvinyl acetal resin film c was laminated on an A4 size copper foil and thermo-compression bonded at the temperature described in Table 7 so that 8 cm of an end was not thermo-compression bonded. The obtained resin film was cut into 1 cm wide strips so that an end not thermo-compression bonded served as a portion clamped by a chuck of a tensile tester, and a tensile test was performed at a chuck distance of 4 cm and a tensile speed of 100 mm/min. A peel force of every 20 mm was output, and an average value thereof was taken as peel strength.

The state (grid shape) of the conductive layer and the conductivity were evaluated in the same manner as in Example 7 except that a copper foil was bonded by thermo-compression bonding at the temperature described in Table 7. The results are shown in Table 7.

[Table 7]

| | | Polyvinyl acetal resin film | Bonding temperature (°C) | Peeling strength (N/cm) | Conductive layer | | | State of conductive layer | | Conductivity |
|---|---|---|---|---|---|---|---|---|---|---|
| | | | | | Shape | Line width | Pitch | After prelamination | After autoclaving | |
| | | | | | | (µm) | | | | |
| Reference example | 35 | c | 100 | 0.2 | Grid | 10 | 500 | A | B | B |
| | 36 | c | 120 | 1.9 | Grid | 10 | 500 | A | A | A |
| | 37 | c | 140 | 2.9 | Grid | 10 | 500 | A | A | A |
| | 38 | c | 150 | >3.5 | Grid | 10 | 500 | A | A | A |

As shown in Table 7, when polyvinyl acetal resin film c and the copper foil were bonded at a temperature of 100°C or higher (Reference Examples 35 to 38), good peel strength between the polyvinyl acetal resin film c and the copper foil was obtained, the shape of the linear conductive material of the conductive layer was well maintained both after prelamination and after autoclaving, and good conductivity was obtained. When the bonding temperature was higher than 100°C (Reference Examples 36 to 38), no deformation was observed in the shape of the linear conductive material of the conductive layer even after autoclaving, the shape was extremely well maintained, and the conductivity was very good. This result indicates that when a laminated glass is produced using the polyvinyl acetal resin film of the present invention, deformation and destruction of the functional layer or the conductive layer are well suppressed, and misalignment of a glass of the obtained laminated glass under high temperature conditions is well suppressed.

[Example 6]

<Effects of surface roughness of polyvinyl acetal resin film on shape retention of wiring of conductive wire structure>

Regarding the side of the polyvinyl acetal resin film c of Reference Example 11 that was not a surface in contact with a metal elastic roll, that is, a surface in contact with a mirror surface metal cooling roll, the mean spacing Sm value of unevenness and the value of ten-point average roughness Rz were measured according to JIS B0601-1994 using Surftest SJ-310 (measurement force: 0.75 mN, stylus shape: tip radius 2 µm Rltip angle 60°) from Mitutoyo Corporation. The state of the conductive layer and the conductivity were evaluated in the same manner as in Reference Example 11. The results are shown in Table 8.

[Example 7]

In the film c obtained in Example 6, evaluation was performed in the same manner as in Example 6 with respect to the surface in contact with the metal elastic roll. The film is referred to as the film q in Example 7. The results are shown in Table 8.

[Example 8]

In the polyvinyl acetal resin film o obtained in the same manner as in Example 6 except that a rubber elastic roll was used instead of the metal elastic roll, evaluation was performed in the same manner as in Example 6 with respect to a surface in contact with the mirror surface metal cooling roll. The results are shown in Table 8.

[Example 9]

In the polyvinyl acetal resin film p obtained in the same manner as in Example 6 except that a rubber elastic roll was used instead of a metal elastic roll and an embossed roll (1) was used instead of a mirror surface metal cooling roll, evaluation was performed in the same manner as in Example 6 with respect to a surface in contact with the embossed roll (1). The results are shown in Table 8.

[Comparative Example 1]

In the polyvinyl acetal resin film r obtained in the same manner as in Example 6 except that a rubber elastic roll was used instead of the metal elastic roll and a plasticizer 3GO was added in a content described in Table 5, evaluation was performed in the same manner as in Example 6 with respect to a surface in contact with a mirror surface metal cooling roll. The results are shown in Table 8.

[Comparative Example 2]

In the polyvinyl acetal resin film s obtained in the same manner as in Comparative Example 1 except that an embossed roll (2) was used instead of a mirror surface metal cooling roll and no plasticizer was added, evaluation was performed in the same manner as in Example 6 with respect to a surface in contact with the embossed roll (2). The results are shown in Table 8.

[Comparative Example 3]

In the polyvinyl acetal resin film t obtained in the same manner as in Comparative Example 1 except that an embossed roll (3) was used instead of a mirror surface metal cooling roll and no plasticizer was added, evaluation was performed in the same manner as in Example 6 with respect to a surface in contact with the embossed roll (3). The results are shown in Table 8.

[Comparative Example 4]

In the film t obtained in Comparative Example 3, evaluation was performed in the same manner as in Example 6 with respect to the surface in contact with the rubber elastic roll. The film is referred to as the film u in Comparative Example 4. The results are shown in Table 8.

[Table 8]

| | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|
| Polyvinyl acetal resin film | f | g | h | i | j | c | q | o | p | r | s | t | u |
| Hydroxyl group amount of resin (mass%) — Resin 1 | 19.8 | 19.8 | 19.8 | 19.8 | 19.8 | 19.8 | 19.8 | 19.8 | 19.8 | 19.8 | 19.8 | 19.8 | 19.8 |
| Hydroxyl group amount of resin (mass%) — Resin 2 | 20.1 | 20.1 | 20.1 | 20.1 | 20.1 | 20.1 | 20.1 | 20.1 | 20.1 | 20.1 | 20.1 | 20.1 | 20.1 |
| Hydroxyl group amount of resin (mass%) — Resin 1 + Resin 2 | 19.9 | 19.9 | 19.9 | 19.9 | 19.9 | 19.9 | 19.9 | 19.9 | 19.9 | 19.9 | 19.9 | 19.9 | 19.9 |
| Resin 1 : Resin 2 (mass ratio) | 75:25 | 75:25 | 75:25 | 75:25 | 75:25 | 75:25 | 75:25 | 75:25 | 75:25 | 75:25 | 75:25 | 75:25 | 75:25 |
| Viscosity of 10% by mass solution of resin in toluene/ethanol=1/1 (mPa·s) — Resin 1 | 152 | 152 | 152 | 152 | 152 | 152 | 152 | 152 | 152 | 152 | 152 | 152 | 152 |
| Viscosity — Resin 2 | 1410 | 1410 | 1410 | 1410 | 1410 | 1410 | 1410 | 1410 | 1410 | 1410 | 1410 | 1410 | 1410 |
| Viscosity — Resin 1 + Resin 2 | 245 | 245 | 245 | 245 | 245 | 245 | 245 | 245 | 245 | 245 | 245 | 245 | 245 |
| Thickness of the film (μm) | 25 | 125 | 250 | 300 | 50 | 50 | 50 | 50 | 50 | 50 | 50 | 50 | 50 |
| Plasticizer (mass%) | 0 | 0 | 0 | 0 | 18 | 0 | 0 | 0 | 0 | 22 | 0 | 0 | 0 |
| Adhesive | Without | Without | Without | Without | Without | Without | Without | Without | Without | Without | Without | Without | Without |
| Copper foil thickness (μm) | 7 | 7 | 7 | 7 | 7 | 7 | 7 | 7 | 7 | 7 | 7 | 7 | 7 |
| Bonding surface between the film and copper foil | Blackened surface | Blackened surface | Blackened surface | Blackened surface | Blackened surface | Blackened surface | Blackened surface | Blackened surface | Blackened surface | Blackened surface | Blackened surface | Blackened surface | Blackened surface |
| Surface roughness — Rz (μm) | 1.3 | 0.8 | 0.1 | 0.1 | 1.6 | 1.3 | 2.2 | 1.9 | 4.2 | 3.7 | 27.0 | 25.0 | 4.0 |
| Surface roughness — Sm (μm) | 3180 | 2900 | 2600 | 2710 | 2920 | 3190 | 2960 | 1480 | 1410 | 2630 | 450 | 1460 | 430 |
| Surface roughness — Sm/Rz | 2446 | 3625 | 26000 | 27100 | 1825 | 2454 | 1345 | 779 | 336 | 711 | 17 | 58 | 108 |
| Bonding temperature (°C) | 120 | 120 | 120 | 120 | 120 | 120 | 120 | 120 | 120 | 120 | 120 | 120 | 120 |
| Conductive layer — Shape | Grid | Grid | Grid | Grid | Grid | Grid | Grid | Grid | Grid | Grid | Grid | Grid | Grid |
| Conductive layer — Line width (μm) | 10 | 10 | 10 | 10 | 10 | 10 | 10 | 10 | 10 | 10 | 10 | 10 | 10 |
| Conductive layer — Pitch (μm) | 500 | 500 | 500 | 500 | 500 | 500 | 500 | 500 | 500 | 500 | 500 | 500 | 500 |
| State of conductive layer — After prelamination | B | A | A | A | A | A | B | B | C | D | D | C | C |
| State of conductive layer — After autoclaving | B | A | A | A | A | A | B | B | C | D | D | D | D |
| Conductivity | B | A | A | A | A | A | B | B | C | D | D | D | D |

As shown in Table 8, when the mean spacing Sm of unevenness of the polyvinyl acetal resin film was 500 μm or more, the ratio Sm/Rz of the mean spacing Sm value to the value of ten-point average roughness Rz of the unevenness was 200 or more, and the amount of the plasticizer in the polyvinyl acetal resin film was within the range specified in the present invention (Examples 1 to 9), the shape of the linear conductive material of the conductive layer was well maintained both after prelamination and after autoclaving. This indicates that when the surface of the polyvinyl acetal resin film is smooth, it is possible to achieve more uniform and even bonding with fewer minute non-bonded portions between the polyvinyl acetal resin film and the copper foil. Consequently, when a laminated glass is produced using the polyvinyl acetal resin film of the present invention, deformation and destruction of the functional layer or the conductive layer are well suppressed, and misalignment of a glass of the obtained laminated glass under high temperature conditions is well suppressed.

DESCRIPTION OF REFERENCE SIGNS

10      Laminated glass for measuring heat creep resistance value
11      Glass A
12      Glass B
13      Laminate of polyvinyl acetal resin film and plasticized polyvinyl butyral resin layer
13A     Polyvinyl acetal resin film
13B     0.76 mm thick plasticized polyvinyl butyral resin layer
13C     0.38 mm thick plasticized polyvinyl butyral resin layer
13D     0.38 mm thick plasticized polyvinyl butyral resin layer
20      Laminated glass for measuring heat creep resistance value to which iron plate is bonded
21      Iron plate

**Claims**

1. A polyvinyl acetal resin film for laminated glass,

   a viscosity of toluene/ethanol=1/1 (by mass ratio) solution of a polyvinyl acetal resin in a resin composition constituting the polyvinyl acetal resin film with a concentration of 10% by mass, measured at 30 rpm and 20°C by using a Brookfield-type (B-type) viscometer, being 100 to 1000 mPa·s,
   the polyvinyl acetal resin film comprising a plasticizer in an amount of 0 to 20% by mass based on a total mass of the resin composition constituting the polyvinyl acetal resin film,
   the polyvinyl acetal resin film having a thickness of 10 to 350 $\mu$m,
   the polyvinyl acetal resin film exhibiting a mean spacing Sm value of unevenness of at least one side of 500 $\mu$m or more, and a ratio Sm/Rz of the mean spacing Sm value of unevenness to a value of ten-point average roughness Rz of at least one side of 200 or more, wherein Sm and Rz are measured according to JIS B0601-1994, and

   the molecular weight distribution of the polyvinyl acetal resin in the resin composition constituting the polyvinyl acetal resin film is 2.7 or more.

2. The polyvinyl acetal resin film according to claim 1, wherein the value of the ten-point average roughness Rz of at least one side is 20 $\mu$m or less.

3. The polyvinyl acetal resin film according to claim 1 or 2, wherein the ratio Sm/Rz is 300 or more.

4. The polyvinyl acetal resin film according to any one of claims 1 to 3, wherein the viscosity of toluene/ethanol=1/1 (by mass ratio) solution of a polyvinyl acetal resin in a resin composition constituting the polyvinyl acetal resin film with a concentration of 10% by mass, measured at 30 rpm and 20°C by using a Brookfield-type (B-type) viscometer, is 300 mPa·s or less.

5. The polyvinyl acetal resin film according to any one of claims 1 to 3, wherein the viscosity of toluene/ethanol=1/1 (by mass ratio) solution of a polyvinyl acetal resin in a resin composition constituting the polyvinyl acetal resin film with a concentration of 10% by mass, measured at 30 rpm and 20°C by using a Brookfield-type (B-type) viscometer, is more than 200 mPa·s.

6. The polyvinyl acetal resin film according to any one of claims 1 to 5, wherein the polyvinyl acetal resin in the resin composition constituting the polyvinyl acetal resin film is a mixture of at least two polyvinyl acetal resins having different viscosity average polymerization degrees, or an acetalized product of a mixture of at least two polyvinyl alcohol-based resins having different viscosity average polymerization degrees.

7. A polyvinyl acetal resin film having a functional layer on at least one side of the polyvinyl acetal resin film according to any one of claims 1 to 6.

8. A method of producing a polyvinyl acetal resin film, comprising applying a material constituting a functional layer by coating, printing or lamination on at least one side of the polyvinyl acetal resin film according to any one of claims 1 to 6.

9. The polyvinyl acetal resin film according to claim 7, wherein the functional layer is a conductive layer.

10. The polyvinyl acetal resin film according to claim 9, wherein the conductive layer comprises a plurality of linear conductive materials having a line width of 0.01 to 5 mm.

11. The polyvinyl acetal resin film according to claim 9, wherein the conductive layer comprises a plurality of linear conductive materials having a line width of 1 to 30 $\mu$m.

12. A laminate comprising the polyvinyl acetal resin film according to any one of claims 7 and 9 to 11, between a plurality of transparent substrates.

13. A laminate comprising the polyvinyl acetal resin film according to any one of claims 7 and 9 to 11 and a plasticized polyvinyl acetal resin layer, between a plurality of transparent substrates.

14. The laminate according to claim 12 or 13, wherein the transparent substrate is a glass.


**Patentansprüche**

1. Polyvinylacetalharzfolie für laminiertes Glas,

wobei eine Lösung einer Viskosität von Toluol/Ethanol=1/1 (auf das Masseverhältnis bezogen) eines Polyvinylacetalharzes in einer Harzzusammensetzung, die die Polyvinylacetalharzfolie mit einer Konzentration von 10 Masse-%, bei 30 UpM und 20 °C unter Anwendung eines Viskosimeters vom Typ Brookfield (B-Typ) gemessen, bildet, 100 bis 1000 mPa·s beträgt,
wobei die Polyvinylacetalharzfolie, die einen Weichmacher in einer Menge von 0 bis 20 Masse-%, auf eine Gesamtmasse der Harzzusammensetzung bezogen, umfasst, die Polyvinylacetalharzfolie bildet,
wobei die Polyvinylacetalharzfolie eine Dicke von 10 bis 350 $\mu$m aufweist,
wobei die Polyvinylacetalharzfolie einen mittleren Ungleichmäßigkeitsabstand-Sm-Wert von mindestens einer Seite von 500 $\mu$m oder mehr und ein Sm/Rz-Verhältnis des mittleren Ungleichmäßigkeitsabstand-SM-Werts zu einem Wert von durchschnittlicher Zehnpunktrauheit Rz von mindestens einer Seite von 200 oder mehr aufweist, wobei
die Molekulargewichtsverteilung des Polyvinylacetalharzes in der Harzzusammensetzung, die die Polyvinylacetalharzfolie bildet, 2,7 oder mehr beträgt.

2. Polyvinylacetalharzfolie nach Anspruch 1, wobei der Wert der durchschnittlichen Zehnpunktrauheit Rz von mindestens einer Seite 20 $\mu$m oder weniger beträgt.

3. Polyvinylacetalharzfolie nach Anspruch 1 oder 2, wobei das Sm/Rz-Verhältnis 300 oder mehr beträgt.

4. Polyvinylacetalharzfolie nach einem der Ansprüche 1 bis 3, wobei die Lösung einer Viskosität von Toluol/Ethanol=1/1 (auf das Masseverhältnis bezogen) eines Polyvinylacetalharzes in einer Harzzusammensetzung, die die Polyvinylacetalharzfolie mit einer Konzentration von 10 Masse-%, bei 30 UpM und 20 °C unter Anwendung eines Viskosimeters vom Typ Brookfield (B-Typ) gemessen, bildet, 300 mPa·s oder weniger beträgt.

5. Polyvinylacetalharzfolie nach einem der Ansprüche 1 bis 3, wobei die Lösung einer Viskosität von Toluol/Ethanol=1/1 (auf das Masseverhältnis bezogen) eines Polyvinylacetalharzes in einer Harzzusammensetzung, die die Polyvinylacetalharzfolie mit einer Konzentration von 10 Masse-%, bei 30 UpM und 20 °C unter Anwendung eines Viskosimeters vom Typ Brookfield (B-Typ) gemessen, bildet, mehr als 200 mPa·s beträgt.

6. Polyvinylacetalharzfolie nach einem der Ansprüche 1 bis 5, wobei das Polyvinylacetalharz in der Harzzusammensetzung, die die Polyvinylacetalharzfolie bildet, eine Mischung von mindestens zwei Polyvinylacetalharzen, die verschiedene viskositätsdurchschnittliche Polymerisationsgrade aufweisen, oder ein acetalisiertes Produkt einer Mischung von mindestens zwei Harzen auf Polyvinylbasis, die verschiedene viskositätsdurchschnittliche Polymerisationsgrade aufweisen, ist.

7. Polyvinylacetalharzfolie, die eine funktionelle Schicht auf mindestens einer Seite der Polyvinylacetalharzfolie nach einem der Ansprüche1 bis 6 aufweist.

8. Verfahren für die Herstellung einer Polyvinylacetalharzfolie, umfassend das Auftragen eines Materials, das eine funktionelle Schicht bildet, durch schichtförmiges Auftragen, Drucken oder Laminieren auf mindestens einer Seite der Polyvinylacetalharzfolie nach einem der Ansprüche 1 bis 6.

9. Polyvinylacetalharzfolie nach Anspruch 7, wobei die funktionelle Schicht eine leitfähige Schicht ist.

10. Polyvinylacetalharzfolie nach Anspruch 9, wobei die leitfähige Schicht eine Mehrzahl von linearen leitfähigen Materialien umfasst, die eine Linienbreite von 0,01 bis 5 mm aufweisen.

11. Polyvinylacetalharzfolie nach Anspruch 9, wobei die leitfähige Schicht eine Mehrzahl von linearen leitfähigen Materialien umfasst, die eine Linienbreite von 1 bis 30 μm aufweisen.

12. Laminat umfassend die Polyvinylacetalharzfolie nach einem der Ansprüche 7 und 9 bis 11, zwischen einer Vielzahl transparenter Substrate.

13. Laminat umfassend die Polyvinylacetalharzfolie nach einem der Ansprüche 7 und 9 bis 11 und eine Schicht weichgemachtes Polyvinylacetalharz zwischen einer Vielzahl transparenter Substrate.

14. Laminat nach Anspruch 12 oder 13, wobei das transparente Substrat ein Glas ist.


**Revendications**

1. Film de résine de polyvinyl acétal pour verre laminé,

une viscosité d'une solution de toluène/éthanol = 1/1 (par rapport en masse) d'une résine de polyvinyl acétal dans une composition de résine constituant le film de résine de polyvinyl acétal avec une concentration de 10 % en masse, mesurée à 30 tpm et 20 °C en utilisant un viscosimètre de type Brookfield (type B), étant de 100 à 1 000 mPa•s,
le film de résine de polyvinyl acétal comprenant un plastifiant en une quantité de 0 à 20 % en masse sur la base d'une masse totale de la composition de résine constituant le film de résine de polyvinyl acétal,
le film de résine de polyvinyl acétal ayant une épaisseur de 10 à 350 μm,
le film de résine de polyvinyl acétal présentant une valeur Sm d'espacement moyen de non uniformité d'au moins un côté de 500 μm ou plus, et un rapport Sm/Rz de la valeur Sm d'espacement moyen de non uniformité à une valeur de rugosité moyenne de dix•points Rz d'au moins un côté de 200 ou plus,
la distribution de poids moléculaire de la résine de polyvinyl acétal dans la composition de résine constituant le film de résine de polyvinyl acétal étant de 2,7 ou plus.

2. Film de résine de polyvinyl acétal selon la revendication 1, dans lequel la valeur de la rugosité moyenne de dix•points Rz d'au moins un côté est de 20 μm ou moins.

3. Film de résine de polyvinyl acétal selon la revendication 1 ou 2, dans lequel le rapport Sm/Rz est de 300 ou plus.

4. Film de résine de polyvinyl acétal selon l'une quelconque des revendications 1 à 3, dans lequel la viscosité de la solution de toluène/éthanol = 1/1 (par rapport en masse) d'une résine de polyvinyl acétal dans une composition de résine constituant le film de résine de vinyl acétal avec une concentration de 10 % en masse, mesurée à 30 tpm et 20 °C en utilisant un viscosimètre de type Brookfieeld (type B), est de 300 mPa•s ou moins.

5. Film de résine de polyvinyl acétal selon l'une quelconque des revendications 1 à 3, dans lequel la viscosité de la solution de toluène/éthanol = 1/1 (par rapport en masse) d'une résine de polyvinyl acétal dans une composition de résine constituant le film de résine de vinyl acétal avec une concentration de 10 % en masse, mesurée à 30 tpm et 20 °C par un viscosimètre de type Brookfield (type B), est de plus de 200 mPa•s.

6. Film de résine de polyvinyl acétal selon l'une quelconque des revendications 1 à 5, dans lequel la résine de polyvinyl acétal dans la composition de résine constituant le film de résine de polyvinyl acétal est un mélange d'au moins deux résines de polyvinyl acétal ayant des degrés de polymérisation moyens de viscosité différents ou un produit acétalisé d'un mélange d'au moins deux résine à base d'alcool de polyvinyle ayant des degrés de polymérisation moyens de viscosité différents.

7. Film de résine de polyvinyl acétal ayant une couche fonctionnelle sur au moins un côté du film de résine de polyvinyl acétal selon l'une quelconque des revendications 1 à 6.

8. Procédé de production d'un film de résine de polyvinyl acétal, comprenant l'application d'un matériau constituant une couche fonctionnelle par revêtement, impression ou stratification sur au moins un côté du film de résine de polyvinyl acétal selon l'une quelconque de revendications 1 à 6.

9. Film de résine de polyvinyl acétal selon la revendication 7, dans lequel la couche fonctionnelle est une couche conductrice.

10. Film de résine de polyvinyl acétal selon la revendication 9, dans lequel la couche conductrice comprend une pluralité de matériaux conducteurs linéaires ayant une largeur de ligne de 0,01 à 5 mm.

11. Film de résine de polyvinyl acétal selon la revendication 9, dans lequel la couche conductrice comprend une pluralité de matériaux conducteurs linéaires ayant une largeur de ligne de 1 à 30 µm.

12. Stratifié comprenant le film de résine de polyvinyl acétal selon l'une quelconque de revendications 7 et 9 à 11, entre une pluralité de substrats transparents.

13. Stratifié comprenant le film de résine de polyvinyl acétal selon l'une quelconque de revendications 7 et 9 à 11 et une couche de résine de polyvinyl acétal plastifiée, entre une pluralité de substrats transparents.

14. Stratifié selon la revendication 12 ou 13, dans lequel le substrat transparent est un verre.

[FIG.1]

[FIG.2]

[FIG.3]

[FIG.4]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013056811 A
- JP 2013516043 A
- US 2016288459 A1
- EP 1527107 B1
- WO 2004063231 A1
- EP 1606325 A1
- WO 2003020776 A1
- EP 1235683 B1